# FASCICULE DE BREVET EUROPEEN

(11) **EP 2 706 011 B1**
(45) Date de publication et mention de la délivrance du brevet: **01.07.2015**
(21) Numéro de dépôt: 13181403.0
(22) Date de dépôt: 22.08.2013
(51) Int. Cl.: B64D 27/20, B64D 27/26

(54) **Ensemble propulsif latéral pour aéronef comprenant un arceau de support d'un turbomoteur**
Laterale Antriebseinheit für Luftfahrzeug mit einem Triebwerksaufhängebogen
Lateral propulsion assembly for an aircraft including a turboshaft engine support arch

(30) Priorité: 06.09.2012 FR 1258335
(43) Date de publication de la demande: 12.03.2014
(73) Titulaire: Airbus Operations (Société par actions simplifiée), 31060 Toulouse (FR)
(72) Inventeur: Brochard, Wolfgang, 31300 TOULOUSE (FR); Terral, Romain, 31000 TOULOUSE (FR)
(74) Mandataire: Augarde, Eric

(56) Documents cités:
- FR-A1- 2 862 045
- FR-A1- 2 939 409
- US-A- 4 044 973

## Description

### DOMAINE TECHNIQUE

La présente invention se rapporte au domaine des ensembles propulsifs des aéronefs, et concerne plus particulièrement les moyens d'accrochage des turbomoteurs à la structure des aéronefs.

### ÉTAT DE LA TECHNIQUE ANTÉRIEURE

Dans les aéronefs, en particulier les avions, les turboréacteurs conventionnels ainsi que les turboréacteurs à soufflante(s) non carénée(s), également dénommés « *open rotor »,* sont en général supportés par un mât d'accrochage, également dénommé pylône ou *EMS,* de l'anglais *« Engine Mounting Structure* », comprenant une structure rigide en forme générale de caisson portant des moyens de liaison du turboréacteur à cette structure rigide. Ces moyens de liaison se répartissent habituellement en une attache moteur avant et une attache moteur arrière globalement centrées par rapport à un plan médian de la structure rigide, ainsi que deux bielles de reprise des efforts de poussée disposées de part et d'autre de ce plan médian.

Des mâts d'accrochage de ce type sont illustrés sur la figure 1 de la demande internationale de brevet n° WO2009/147341 A2 en ce qui concerne le cas de l'accrochage d'un turboréacteur conventionnel sous une aile principale d'avion et sur les figures 1 et 2 de la demande internationale de brevet WO2010/031959 A1 en ce qui concerne le cas d'un turboréacteur à soufflantes non carénées rapporté sur le côté d'une partie arrière du fuselage d'un avion.

Un dispositif d'accrochage d'un turbomoteur destiné à être rapporté latéralement sur une structure d'aéronef est illustré dans la demande nationale de brevet FR-A1-2 939 409.

Toutefois, ces mâts d'accrochage ne permettent pas une répartition optimale des moyens de liaison des turbomoteurs à la structure rigide de ces mâts. Ces moyens de liaison se concentrent en effet au niveau de l'extrémité distale de la structure rigide, c'est-à-dire son extrémité en regard du turbomoteur.

La reprise des efforts par ces moyens de liaison ne peut ainsi pas être optimale.

De plus, ce type de configuration limite les possibilités d'intégrer des éléments dissipateurs d'énergie mécanique pour limiter la transmission de vibrations du turbomoteur à la structure de l'aéronef.

Ce type de configuration complique également considérablement l'intégration de moyens de commande de l'inclinaison du turbomoteur, notamment vers le haut ou vers le bas.

En outre, les attaches moteur sont, en général, disposées au droit de roues aubagées en rotation du turbomoteur. Afin de palier à un éventuel arrachement accidentel d'une ou plusieurs aubes d'une telle roue aubagée, phénomène également dénommé *UERF* de l'anglais *Uncontained Engine Rotor Failure,* il est ainsi nécessaire de prévoir une redondance dans ces attaches moteur, en ajoutant des attaches moteur non sollicitées en fonctionnement normal, dites « attaches moteur en attente », et/ou en permettant, en cas de défaillance d'une ou plusieurs attaches moteur, que les autres attaches moteur soient capables de reprendre seules l'ensemble des efforts de support du turbomoteur.

Par ailleurs, les attaches moteur disposées au niveau de l'extrémité distale de la structure rigide requièrent que l'accrochage et le décrochage du turbomoteur s'effectue au moyen d'une translation du turbomoteur sensiblement selon une direction comprise dans un plan médian de la structure rigide.

Dans le cas d'un turbomoteur rapporté sur le côté du fuselage d'un avion, ce plan médian de la structure rigide est incliné par rapport à la direction verticale, de sorte qu'une procédure complète de montage ou de démontage d'un tel turbomoteur comprend au moins deux translations successives, une translation selon la direction verticale et une translation selon une direction du plan médian de la structure rigide.

Il est ainsi souhaitable de pouvoir simplifier les procédures de montage et de démontage des turbomoteurs.

### EXPOSÉ DE L'INVENTION

L'invention a notamment pour but d'apporter une solution simple, économique et efficace à ces problèmes, permettant d'éviter au moins en partie les inconvénients précités.

L'invention propose à cet effet un ensemble propulsif pour aéronef, comprenant un turbomoteur présentant un axe longitudinal parallèle à une direction longitudinale du turbomoteur, ainsi qu'un dispositif d'accrochage du turbomoteur destiné à être rapporté latéralement sur une structure d'aéronef, telle qu'un fuselage, ledit dispositif d'accrochage comprenant une structure rigide d'accrochage présentant une extrémité proximale destinée à être raccordée à la structure d'aéronef et une extrémité distale opposée agencée en regard du turbomoteur, et ladite structure rigide d'accrochage portant des moyens de liaison reliant le turbomoteur à la structure rigide d'accrochage.

Lesdits moyens de liaison comportent au moins un arceau à concavité orientée vers ledit axe longitudinal et présentant une extrémité proximale raccordée à ladite structure rigide d'accrochage et une extrémité distale opposée.

De plus, les extrémités proximale et distale de l'arceau s'étendent de part et d'autre d'un plan longitudinal incluant ledit axe longitudinal et destiné à s'étendre verticalement lorsque ledit ensemble propulsif équipe un aéronef stationné au sol.

En outre, ledit arceau est conformé de sorte que, lorsque cet arceau est vu en coupe selon un plan transversal orthogonal audit axe longitudinal, deux demi-droites, qui partent dudit axe longitudinal et dont la première passe par l'extrémité distale dudit arceau et dont la deuxième est comprise dans ledit plan longitudinal et intercepte ledit arceau, délimitent entre elles un secteur angulaire d'angle compris entre 45 degrés et 120 degrés.

Par « moyens de liaison » reliant le turbomoteur à la structure rigide d'accrochage, il faut comprendre des moyens capables de transmettre à la structure rigide d'accrochage les efforts résultant du support du turbomoteur ainsi que les efforts résultant de la poussée générée par le turbomoteur.

De plus, dans l'ensemble de la présente description, le caractère « proximal » ou « distal » d'un élément traduit respectivement la proximité ou l'éloignement de cet élément par rapport à l'extrémité de la structure rigide d'accrochage destinée à être raccordée à une structure d'aéronef. Ainsi, lorsque l'ensemble propulsif équipe un aéronef, le caractère « proximal » ou « distal » traduit respectivement la proximité ou l'éloignement de l'élément par rapport à ladite structure d'aéronef.

La direction longitudinale du turbomoteur ou de l'ensemble propulsif est définie comme étant la direction de l'axe longitudinal précité de ce turbomoteur.

La disposition des deux demi-droites précitées traduit l'éloignement angulaire de l'extrémité distale de l'arceau par rapport audit plan longitudinal.

D'un point de vue général, l'invention permet d'améliorer la répartition des moyens de liaison du turbomoteur.

En effet, ces moyens de liaison comprennent l'arceau précité et se répartissent donc sur une certaine étendue circonférentielle autour de l'axe longitudinal du turbomoteur.

Selon l'invention, lesdits moyens de liaison comprennent un élément de liaison distal reliant le turbomoteur à une partie d'accrochage distale dudit arceau et agencé du même côté que ladite extrémité distale dudit arceau par rapport audit plan longitudinal, ladite partie d'accrochage distale étant agencée de sorte que lorsque ledit arceau est vu en coupe selon ledit plan transversal, ladite partie d'accrochage distale s'étend à l'extérieur d'un secteur angulaire d'angle compris entre 25 degrés et 100 degrés, ayant pour sommet ledit axe longitudinal, et s'étendant à partir de ladite deuxième demi-droite en direction de ladite extrémité distale dudit arceau.

L'agencement de l'élément de liaison distal du côté opposé à la structure rigide d'accrochage, par rapport à un plan vertical passant par l'axe longitudinal du turbomoteur, offre des possibilités avantageuses en termes de reprise des efforts du turbomoteur ou d'amortissement des vibrations de ce dernier.

A cet effet, ledit élément de liaison distal est de préférence agencé au niveau d'une extrémité distale dudit arceau.

Dans un mode de réalisation préféré de l'invention, lesdits moyens de liaison comprennent en outre un élément de liaison proximal reliant le turbomoteur à une partie d'accrochage proximale dudit arceau, ladite partie d'accrochage proximale étant agencée de sorte que, lorsque ledit arceau est vu en coupe selon ledit plan transversal, ladite partie d'accrochage proximale s'étend à l'extérieur d'un secteur angulaire, d'angle compris entre 25 degrés et 100 degrés, ayant pour sommet ledit axe longitudinal, et s'étendant à partir de ladite deuxième demi-droite en direction de ladite structure rigide d'accrochage.

L'élément de liaison proximal et l'élément de liaison distal précités sont de préférence disposés de manière symétrique par rapport audit plan longitudinal.

Préférentiellement, ledit élément de liaison distal et/ou ledit élément de liaison proximal est un élément dissipateur d'énergie mécanique destiné à amortir des vibrations du turbomoteur.

En variante, l'un et/ou l'autre de ces éléments de liaison peut être une attache moteur.

D'une manière générale, lesdits moyens de liaison reliant ledit turbomoteur à ladite structure rigide d'accrochage comprennent de préférence une pluralité d'attaches moteur qui sont aptes à reprendre conjointement l'intégralité des efforts de liaison du turbomoteur à la structure rigide d'accrochage, et qui sont agencées de manière à permettre une mise en référence du turbomoteur par rapport à la structure rigide d'accrochage, par un déplacement du turbomoteur depuis le sol, en translation selon la direction verticale.

Par « mise en référence » du turbomoteur, il faut comprendre un positionnement de celui-ci dans sa position de fonctionnement, un tel positionnement autorisant la fixation des attaches moteur précitées au turbomoteur.

La dépose du turbomoteur depuis sa position de fonctionnement, et à l'inverse, sa liaison au dispositif d'accrochage à partir du sol, peuvent ainsi être opérées moyennant un simple déplacement du turbomoteur en translation selon la direction verticale.

A cet effet, lesdits moyens de liaison reliant le turbomoteur à la structure rigide d'accrochage sont de préférence intégralement compris dans une région de l'espace délimitée par deux demi-plans délimités chacun par ledit axe longitudinal et s'étendant symétriquement de part et d'autre d'un plan longitudinal incluant ledit axe longitudinal et destiné à s'étendre verticalement lorsque ledit ensemble propulsif équipe un aéronef stationné au sol, chacun desdits demi-plans formant un angle inférieur à 120 degrés avec ledit plan longitudinal, ladite région de l'espace étant destinée à s'étendre au-dessus desdits demi-plans lorsque ledit ensemble propulsif équipe un aéronef stationné au sol.

D'une manière générale, ladite structure rigide d'accrochage prend de préférence la forme d'un caisson, c'est-à-dire d'un assemblage de longerons et de nervures entrecroisés.

De plus, l'arceau précité prolonge avantageusement un longeron de ladite structure rigide d'accrochage.

Ce longeron de ladite structure rigide d'accrochage forme de préférence une première extrémité, selon la direction longitudinale du turbomoteur, de ladite structure rigide d'accrochage.

Par ailleurs, lesdits moyens de liaison comportent avantageusement un autre arceau à concavité orientée vers ledit axe longitudinal du turbomoteur et présentant une extrémité distale s'étendant du côté dudit plan longitudinal opposé à ladite structure rigide d'accrochage, ledit autre arceau étant conformé de sorte que, lorsqu'il est vu en coupe selon ledit plan transversal, deux demi-droites, qui partent dudit axe longitudinal et dont la première passe par l'extrémité distale dudit autre arceau et dont la deuxième est comprise dans ledit plan longitudinal et intercepte ledit autre arceau, délimitent entre elles un secteur angulaire d'angle compris entre 45 degrés et 120 degrés.

Cet autre arceau peut présenter une ou plusieurs des caractéristiques facultatives décrites ci-dessus en relation avec le premier arceau précité.

En particulier, cet autre arceau prolonge de préférence un autre longeron de ladite structure rigide d'accrochage.

De plus, ledit autre longeron forme avantageusement une deuxième extrémité, opposée à ladite première extrémité, de ladite structure rigide d'accrochage.

D'un point de vue général, la présence de dudit autre arceau permet d'améliorer davantage la répartition desdits moyens de liaison.

Par ailleurs, lesdits moyens de liaison comprennent avantageusement une poutre longitudinale qui est supportée par chaque arceau raccordé à ladite structure rigide d'accrochage.

Une telle poutre longitudinale permet de rigidifier lesdits arceaux et d'améliorer encore la répartition des moyens de liaison.

La liaison entre cette poutre longitudinale et chaque arceau est par exemple réalisée par un encastrement de cette poutre dans une encoche ou un orifice ménagé dans une âme transversale de l'arceau.

La poutre longitudinale est de préférence centrée par rapport audit plan longitudinal.

De plus, cette poutre longitudinale porte de préférence au moins une attache moteur.

Cette attache moteur est de préférence du type souple, c'est-à-dire présentant une élasticité dans sa direction de travail.

Une telle attache moteur permet de faciliter l'amortissement des vibrations du turbomoteur au moyen d'amortisseurs travaillant dans la direction de travail de ladite attache moteur.

A ce titre, la poutre longitudinale porte de préférence un ou plusieurs amortisseurs agencés sur une portion de la poutre allant de l'un à l'autre des deux arceaux précités.

Ladite poutre longitudinale porte avantageusement une attache moteur pourvue d'un actionneur apte à modifier l'inclinaison de l'axe longitudinal du turbomoteur dans ledit plan longitudinal.

Une modification de l'inclinaison de l'axe longitudinal du turbomoteur peut en effet contribuer à la réduction des nuisances sonores du turbomoteur.

Dans le mode de réalisation préféré de l'invention, ladite poutre longitudinale supporte un arceau additionnel décalé, selon la direction longitudinale du turbomoteur, par rapport à ladite structure rigide d'accrochage, et de préférence centré par rapport audit plan longitudinal.

Ledit arceau additionnel porte avantageusement deux attaches moteur latérales agencées de part et d'autre dudit plan longitudinal et conçues pour la reprise des efforts orientés selon la direction verticale.

Ces attaches moteur sont de préférence du type souple, c'est-à-dire présentant une élasticité selon la direction verticale.

De plus, l'arceau additionnel porte de préférence une attache moteur centrale qui est centrée par rapport audit plan longitudinal et conçue au moins pour la reprise des efforts orientés selon une direction transversale du turbomoteur.

Il faut comprendre par « direction transversale » une direction orthogonale audit plan longitudinal.

Cette attache moteur centrale portée par l'arceau additionnel comporte de préférence un pion de cisaillement ayant un axe sensiblement vertical et solidaire de l'un des éléments parmi le turbomoteur et l'arceau additionnel, tout en étant inséré dans un alésage formé dans l'autre de ces éléments.

Dans le mode de réalisation préféré de l'invention, ladite attache moteur centrale portée par l'arceau additionnel est en outre conçue pour la reprise des efforts orientés selon la direction longitudinale du turbomoteur.

En variante, ladite structure rigide d'accrochage peut porter à son extrémité distale une attache moteur conçue pour la reprise des efforts orientés selon la direction longitudinale du turbomoteur.

Par ailleurs, ladite poutre longitudinale porte de préférence une attache moteur agencée, par rapport à ladite structure rigide d'accrochage, du côté longitudinal opposé à l'arceau additionnel, et conçue au moins pour la reprise des efforts orientés selon la direction verticale.

Le terme « attache moteur » est à comprendre ici dans un sens large, englobant le cas d'une combinaison de plusieurs éléments, tels que des bielles, travaillant dans des directions distinctes mais dont la combinaison permet la reprise des efforts verticaux.

Dans le mode de réalisation préféré de l'invention, une telle attache moteur permet en outre d'assurer la reprise du moment selon la direction transversale, conjointement avec les attaches moteur latérales portées par l'arceau additionnel.

Par ailleurs, dans le mode de réalisation préféré de l'invention, ladite structure rigide d'accrochage comporte à son extrémité distale une attache moteur conçue pour la reprise des efforts orientés selon la direction transversale du turbomoteur.

En variante, ladite attache moteur, portée par ladite poutre longitudinale et agencée du côté longitudinal opposé audit arceau additionnel, peut être en outre conçue pour la reprise des efforts orientés selon la direction transversale du turbomoteur.

D'une manière générale, lesdits moyens de liaison comportent de préférence une pluralité d'éléments dissipateurs d'énergie mécanique reliant chaque arceau précité au turbomoteur, ladite pluralité d'éléments de liaison dissipateurs d'énergie mécanique comprenant au moins l'élément de liaison distal décrit ci-dessus, et un élément de liaison supérieur centré par rapport audit plan longitudinal.

Par ailleurs, l'ensemble propulsif précité comprend en outre avantageusement un carénage aérodynamique externe.

Par « carénage aérodynamique externe », il faut comprendre un carénage baigné par le vent relatif circulant à l'extérieur à l'ensemble propulsif.

Ce carénage aérodynamique externe comprend de préférence une peau structurale qui recouvre et est fixée sur chaque arceau raccordé à ladite structure rigide d'accrochage, auquel cas lesdits moyens de liaison sont dimensionnés de sorte qu'une partie des efforts de liaison du turbomoteur à ladite structure rigide d'accrochage passe par ladite peau structurale du carénage aérodynamique externe.

Du fait qu'une partie des efforts passe par la peau structurale du carénage aérodynamique externe, la capacité des moyens de liaison précités à reprendre ces efforts peut être réduite. Des éléments tels que les arceaux, l'arceau additionnel et la poutre longitudinale décrits ci-dessus peuvent ainsi être allégés.

De plus, la peau structurale du carénage aérodynamique externe s'étend de préférence au moins jusqu'à l'extrémité distale de chaque arceau précité.

Préférentiellement, cette peau structurale du carénage aérodynamique externe est raccordée à une peau aérodynamique supérieure qui recouvre et est fixée sur une partie au moins de ladite structure rigide d'accrochage.

L'invention concerne également un aéronef, tel qu'un avion, comprenant au moins un ensemble propulsif du type décrit ci-dessus.

De préférence, chaque arceau raccordé à ladite structure rigide d'accrochage comporte une partie s'étendant au-dessus du turbomoteur dudit ensemble propulsif lorsque ledit aéronef est stationné au sol.

L'invention concerne enfin un procédé de dépose d'un turbomoteur d'un ensemble propulsif d'un aéronef du type décrit ci-dessus, ainsi qu'un procédé d'accrochage d'un turbomoteur, initialement posé au sol, à un tel ensemble propulsif.

Chacun de ces procédés comprend un déplacement du turbomoteur, entre une position de service dans laquelle le turbomoteur est accroché au dispositif d'accrochage dudit ensemble propulsif, et une position déposé dans laquelle le turbomoteur est posé au sol.

Selon l'invention, ledit déplacement est une translation selon la direction verticale.

La dépose du turbomoteur depuis sa position de service, et à l'inverse, sa liaison au dispositif d'accrochage à partir du sol, peuvent ainsi être opérées moyennant un simple déplacement du turbomoteur en translation selon la direction verticale.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe transversale d'une partie arrière d'un aéronef équipé de deux ensembles propulsifs selon un mode de réalisation préféré de l'invention, ces ensembles propulsifs étant rapportés latéralement sur le fuselage de l'aéronef ;
- la figure 2a est une vue schématique plongeante en perspective de l'un des ensembles propulsifs de l'aéronef de la figure 1, cet ensemble propulsif comprenant un turbomoteur, un dispositif d'accrochage de ce turbomoteur, ainsi qu'un carénage aérodynamique externe ;
- la figure 2b est une vue schématique en perspective, et en contre-plongée, de l'ensemble propulsif de la figure 2a ;
- la figure 3 est une vue schématique plongeante en perspective d'une structure rigide d'accrochage et d'une sous-structure rigide qui appartiennent au dispositif d'accrochage de l'ensemble propulsif de la figure 2a ;
- la figure 4a est une vue schématique en coupe transversale selon le plan P de la figure 3, d'un arceau avant appartenant à la sous-structure rigide de la figure 3 ;
- la figure 4b est une vue schématique en perspective d'un arceau additionnel appartenant à la sous-structure rigide de la figure 3 ;
- la figure 5 est une vue schématique partielle en perspective, et en contre-plongée, du dispositif d'accrochage de l'ensemble propulsif de la figure 2a, revêtu d'une peau structurale du carénage aérodynamique externe de cet ensemble propulsif ;
- la figure 6 est une vue schématique partielle de dessus du dispositif d'accrochage de l'ensemble propulsif de la figure 2a, revêtu de la peau structurale dudit carénage aérodynamique externe ;
- les figures 7 et 8 sont des vues schématiques partielles en perspective de l'ensemble propulsif de la figure 2a vu depuis l'avant de l'aéronef ;
- les figures 9 et 10 sont des vues schématiques partielles en perspective et à plus grande échelle de l'ensemble propulsif de la figure 2a, illustrant respectivement une attache moteur supérieure avant de reprise des efforts verticaux et une attache moteur latérale de reprise des efforts transversaux ;
- la figure 11 est une vue schématique partielle depuis l'arrière de l'aéronef, de l'ensemble propulsif de la figure 2a ;
- la figure 12 est une vue schématique partielle à plus grande échelle du détail XII de la figure 11, illustrant une attache moteur latérale arrière de reprise des efforts verticaux ;
- la figure 13 est une vue schématique partielle depuis l'avant de l'aéronef, de l'ensemble propulsif de la figure 2a, illustrant un procédé de dépose du turbomoteur de cet ensemble propulsif ;
- la figure 14 est une vue schématique partielle en perspective d'un ensemble propulsif selon un autre mode de réalisation de l'invention, vu depuis l'avant de l'aéronef, illustrant plus particulièrement une attache moteur supérieure avant de cet ensemble propulsif ;
- la figure 15 est une vue schématique partielle en coupe transversale d'un ensemble propulsif selon un autre mode de réalisation de l'invention ;
- la figure 15a est une vue à plus grande échelle et en coupe longitudinale selon le plan A-A de la figure 15, d'une attache moteur latérale de l'ensemble propulsif de cette figure 15 ;
- la figure 16 est une vue schématique partielle en perspective d'une attache moteur supérieure arrière de l'ensemble propulsif de la figure 15 ;
- la figure 17 est une vue schématique partielle en coupe transversale d'un ensemble propulsif selon un autre mode de réalisation de l'invention, illustrant la zone de raccordement de la sous-structure rigide à la structure rigide d'accrochage du dispositif d'accrochage de cet ensemble propulsif ;
- la figure 18 est une vue semblable à la figure 17, illustrant une variante de réalisation de l'ensemble propulsif ;
- la figure 19 est une vue semblable à la figure 17 de l'ensemble propulsif de cette figure 17 vu selon un plan de coupe décalé longitudinalement par rapport au plan de la figure 17.

Dans l'ensemble de ces figures, des références identiques peuvent désigner des éléments identiques ou analogues.

### EXPOSÉ DÉTAILLÉ DE MODES DE RÉALISATION PRÉFÉRÉS

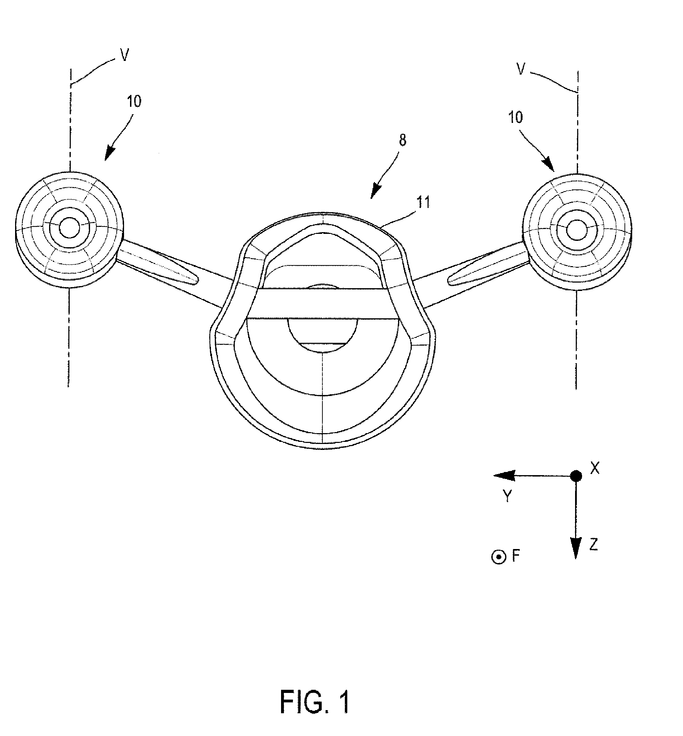

La figure 1 illustre très schématiquement une partie arrière d'un aéronef 8, tel qu'un avion, vue en coupe transversale, comprenant deux ensembles propulsifs 10 rapportés latéralement sur le fuselage 11 de l'aéronef. Ces ensembles propulsifs 10 sont ainsi agencés en arrière d'ailes principales de l'aéronef (non visibles sur la figure 1).

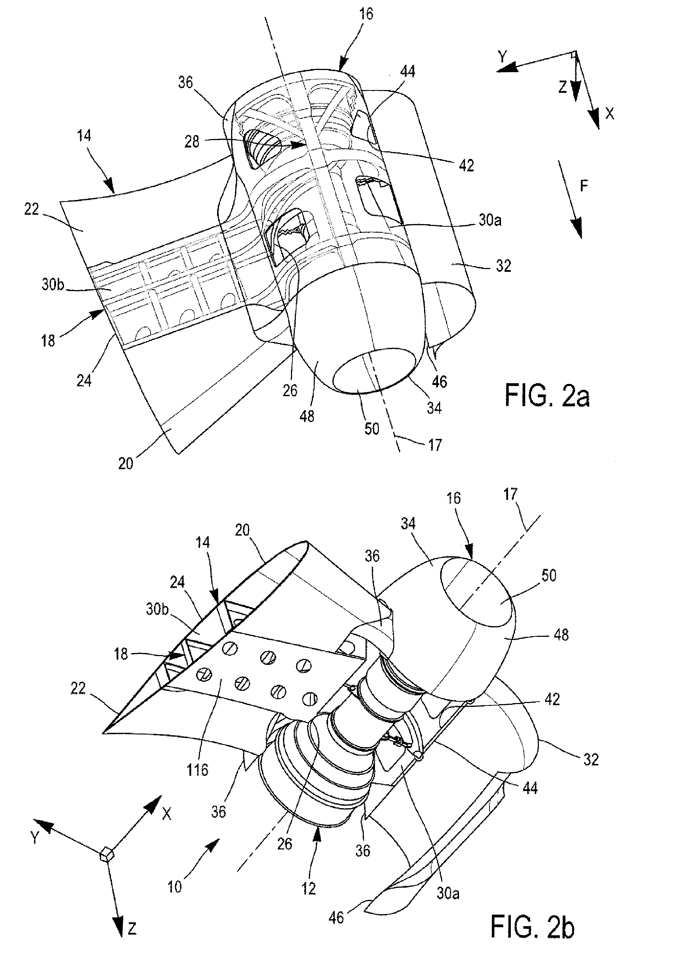

Chaque ensemble propulsif 10 comporte globalement un turbomoteur 12 (figure 2b), un dispositif 14 d'accrochage du turbomoteur à une structure d'aéronef (figures 2a et 2b), ainsi qu'un carénage aérodynamique externe 16 destiné à guider le flux d'air extérieur, également dénommé vent relatif, autour du turbomoteur 12.

Dans l'exemple illustré, le turbomoteur 12 est un turboréacteur à hélices contrarotatives non carénées situées dans une partie arrière du turboréacteur, ces hélices n'étant pas représentées sur les figures. Ce type de turboréacteur est couramment dénommé « *open rotor pusher ».*

Dans toute la description qui suit, par convention, on appelle X la direction longitudinale du turbomoteur 12 et plus généralement de l'ensemble propulsif 10 et de l'aéronef 8, cette direction longitudinale X étant parallèle à un axe longitudinal 17 du turbomoteur 12. D'autre part, on appelle Z la direction de la hauteur, qui correspond à la direction verticale lorsque l'aéronef 8 est stationné au sol ou est dans une position de roulis nul en vol, et on appelle Y la direction transversale de l'ensemble propulsif 10. Les trois directions X, Y et Z sont orthogonales entre elles.

Par ailleurs, les termes « avant » et « arrière » sont à considérer par rapport à une direction d'avancement de l'aéronef 8, représentée schématiquement par la flèche F.

De plus, les termes « distal » et « proximal » traduisent respectivement le fait qu'un élément est éloigné ou proche du fuselage de l'aéronef.

Le dispositif d'accrochage 14 comporte une structure rigide d'accrochage 18, ainsi qu'un carénage de bord d'attaque 20 et un carénage de bord de fuite 22 qui sont respectivement rapportés sur des extrémités avant et arrière de la structure rigide d'accrochage 18.

La structure rigide d'accrochage 18 présente une extrémité proximale 24 destinée à être raccordée latéralement au fuselage 11 de l'aéronef 8, et une extrémité distale 26 opposée qui s'étend en regard du turbomoteur 12.

Le dispositif d'accrochage 14 comporte en outre une sous-structure rigide 28 raccordée à l'extrémité distale 26 de la structure rigide d'accrochage 18.

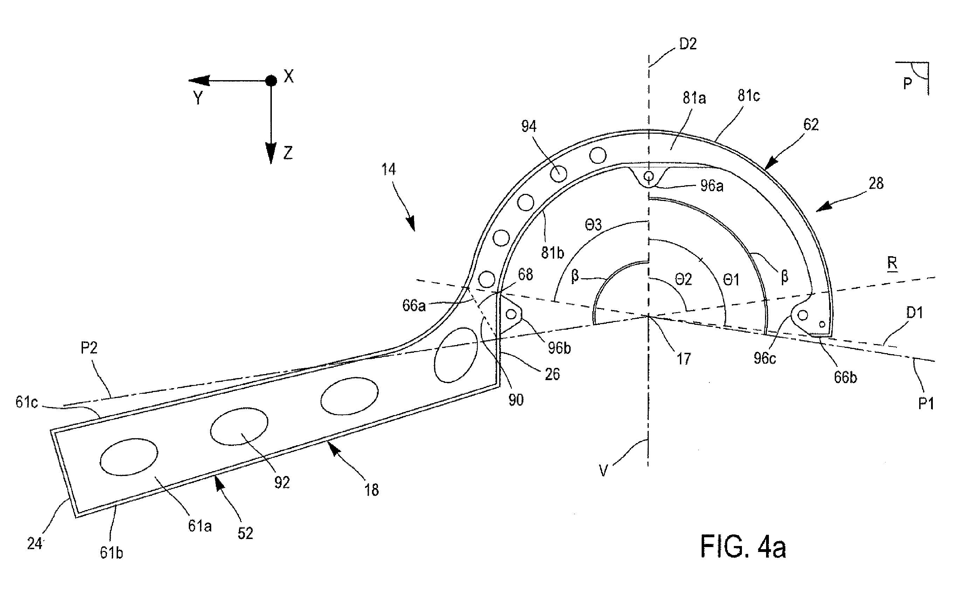

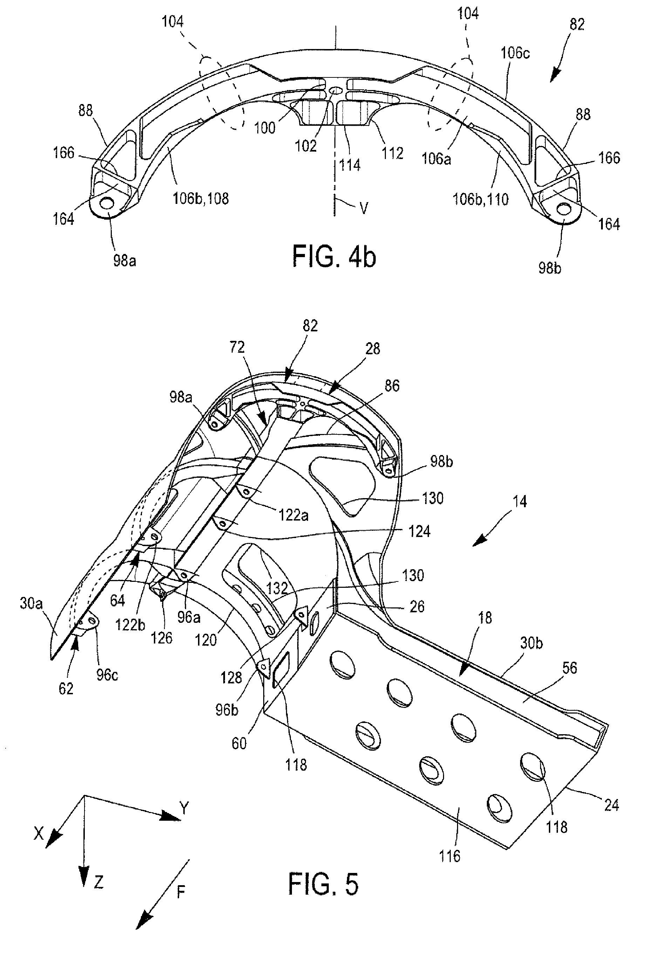

La structure rigide d'accrochage 18 comporte (figure 4) un longeron avant 52, un longeron médian 54, et un longeron arrière 56, ainsi que trois nervures internes 58 et une nervure de fermeture 60. La structure rigide d'accrochage 18 prend ainsi la forme d'un caisson.

D'une manière connue en soi, chacun des longerons précités à, par exemple, la forme d'une poutre à section en 1, et comporte ainsi une âme 61a s'étendant sensiblement selon un plan orthogonal à l'axe longitudinal 17 du turbomoteur, une semelle inférieure 61b et une semelle supérieure 61c raccordées respectivement à des bords inférieur et supérieur de l'âme 61a et s'étendant sensiblement selon des plans parallèles à l'axe longitudinal 17 du turbomoteur et orthogonaux à l'âme 61a.

La sous-structure rigide 28 comporte deux arceaux sensiblement identiques, à savoir un arceau avant 62 et un arceau arrière 64. Ces deux arceaux présentent des extrémités proximales 66a respectives raccordées à des extrémités distales 68 respectives des longerons avant 52 et arrière 56 précités, ainsi que des extrémités distales 66b respectives opposées. Ces deux arceaux 62 et 64 sont des éléments incurvés qui présentent chacun une concavité orientée vers l'axe longitudinal 17 du turbomoteur, comme visible à la figure 4a.

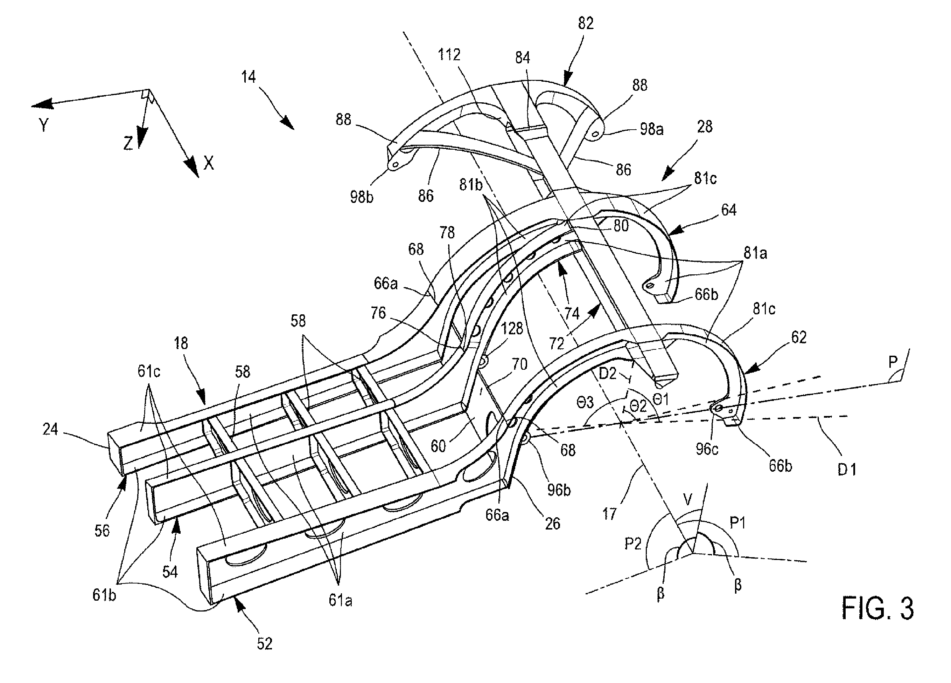

L'arceau avant 62 se poursuit au-delà d'un plan longitudinal V (figures 3, 4a) incluant l'axe longitudinal 17 et destiné à s'étendre verticalement lorsque l'aéronef 8 est stationné au sol. L'étendue circonférentielle de l'arceau avant 62 est quantifiée au moyen d'un angle θ1 formé par deux demi-droites D1 et D2 qui s'étendent chacune à partir de l'axe longitudinal 17. La première demi-droite D1 passe par l'extrémité distale 66b de l'arceau avant 62, tandis que la deuxième demi-droite D2 est comprise dans le plan longitudinal V et intercepte l'arceau avant 62.

L'angle θ1 du secteur angulaire délimité par les deux demi-droites D1 et D2 est sensiblement égal à 100 degrés. De préférence, cet angle θ1 est compris entre 45 degrés et 120 degrés.

Selon une variante, l'étendue circonférentielle de l'arceau avant 62 est quantifiée en considérant qu'un bord radialement interne de l'arceau, vu en coupe selon le plan transversal P de la figure 3, s'étend en direction de l'extrémité distale 66b de l'arceau à partir d'un bord supérieur 70 de la nervure de fermeture 60 de la structure rigide d'accrochage 18. Le bord radialement interne ainsi défini de l'arceau avant 62 présente une étendue circonférentielle égale à 200 degrés environ autour de l'axe longitudinal 17 du turbomoteur.

Les propriétés décrites ci-dessus en ce qui concerne l'arceau avant 62 sont bien entendu valables pour l'arceau arrière 64.

La sous-structure rigide 28 comporte en outre une poutre longitudinale 72 (figure 3) centrée par rapport au plan longitudinal V. Cette poutre longitudinale 72 est encastrée dans une portion médiane de chacun des arceaux avant 62 et arrière 64.

La sous-structure rigide 28 comporte également un demi-arceau médian 74 présentant une extrémité proximale 76 raccordée à une extrémité distale 78 du longeron médian 54 de la structure rigide d'accrochage 18, ainsi qu'une extrémité distale 80 raccordée à un côté latéral de la poutre longitudinale 72. Ce demi-arceau médian 74 est conformé de sorte que son extrémité distale 80 soit décalée vers l'arrière par rapport à son extrémité proximale 76.

Chacun des arceaux avant 62 et arrière 64 comporte une âme 81a s'étendant dans un prolongement de l'âme 61a du longeron 52, 56 correspondant, ainsi qu'une semelle intérieure 81b et une semelle extérieure 81c raccordées respectivement à des bords intérieur et extérieur de l'âme 81a de l'arceau. La semelle extérieure 81c de chacun des arceaux 62, 64 s'étend dans un prolongement de la semelle supérieure 61c du longeron 52, 56 correspondant jusqu'à l'extrémité distale 66b de l'arceau, tandis que la semelle intérieure 81b de l'arceau s'étend dans un prolongement du bord supérieur 70 de la nervure de fermeture 60 de la structure rigide d'accrochage 18, jusqu'à la poutre longitudinale 72. L'âme 61a de chacun des arceaux s'inscrit ainsi dans un plan transversal, tandis que les semelles intérieure 81b et extérieure 81c de chaque arceau sont chacune sensiblement en forme de portion de cylindre de révolution autour de l'axe longitudinal 17.

D'une manière analogue, le demi-arceau médian 74 comporte une âme 81a s'étendant dans un prolongement de l'âme 61a du longeron médian 54, ainsi qu'une semelle intérieure 81b et une semelle extérieure 81c raccordées respectivement à des bords intérieur et extérieur de l'âme 81a de l'arceau. La semelle extérieure 81c du demi-arceau médian 74 s'étend dans un prolongement de la semelle supérieure 61c du longeron médian 54 jusqu'à la poutre longitudinale 72, et la semelle intérieure 81b du demi-arceau médian s'étend dans un prolongement du bord supérieur 70 de la nervure de fermeture 60 de la structure rigide d'accrochage 18, également jusqu'à la poutre longitudinale 72.

La sous-structure rigide 28 comporte en outre un arceau additionnel 82 rapporté sur une extrémité arrière 84 de la poutre longitudinale 72 et formant une extrémité arrière de la sous-structure rigide 28. Comme le montre la figure 3, l'arceau additionnel 82 est décalé vers l'arrière par rapport à la structure rigide d'accrochage 18, et s'étend sur environ 60 degrés autour de l'axe longitudinal 17 du turbomoteur en étant centré par rapport au plan longitudinal V.

Comme cela apparaît sur la figure 3, la sous-structure rigide 28 comprend en outre deux arceaux de renfort 86 qui relient respectivement deux extrémités latérales opposées 88 de l'arceau additionnel 82 à la poutre longitudinale 72.

L'arceau avant 62 et le longeron avant 52 sont de préférence en métal et solidarisés l'un à l'autre par soudage par faisceau d'électrons de leurs extrémités respectives proximale 66a et distale 68, au niveau d'une zone de soudage 90 (figure 4a).

En variante, l'arceau avant 62 et le longeron avant 52 peuvent être solidarisés l'un à l'autre par d'autres moyens, par exemple par éclissage.

Ces modes de réalisation de l'arceau avant 62 et du longeron avant 52 s'appliquent également à l'arceau arrière 64 et au longeron arrière 56, ainsi qu'au demi-arceau médian 74 et au longeron médian 54.

Comme il apparaît sur la figure 4a, le longeron avant 52 comporte des ouvertures 92 destinées à l'allègement de celui-ci, L'arceau avant 62 comporte également des ouvertures 94, réparties dans une moitié proximale de l'arceau.

De plus, l'arceau avant 62 comporte trois chapes s'étendant en saillie radialement vers l'intérieur par rapport à l'axe longitudinal 17 du turbomoteur, et destinées à l'accrochage d'éléments dissipateurs d'énergie, comme cela apparaîtra plus clairement dans ce qui suit. L'une 96a de ces chapes est située au niveau d'un sommet de l'arceau avant 62 tandis que les deux autres chapes 96b et 96c sont situées respectivement au niveau des extrémités proximale et distale de l'arceau de manière à être diamétralement opposées de part et d'autre de l'axe longitudinal 17 du turbomoteur.

L'arceau additionnel 82 est illustré plus en détail sur la figure 4b. Il comprend deux chapes 98a et 98b formant respectivement les extrémités latérales opposées de l'arceau additionnel 82 et destinées chacune à l'accrochage d'une d'attache moteur correspondante. L'arceau additionnel 82 comporte en outre une portion 100 d'attache moteur centrale arrière qui est centrée par rapport au plan longitudinal V, et qui comporte essentiellement un alésage 102 d'axe vertical destiné à recevoir un pion de transmission d'efforts, comme cela apparaîtra plus clairement dans ce qui suit.

L'arceau additionnel 82 est de préférence réalisé en un matériau métallique et est avantageusement formé de trois segments assemblés bout-à-bout, par exemple par une technique de soudage par faisceau d'électrons au niveau de zones de soudage 104 grossièrement représentées sur la figure 4b. En variante, la fixation de ces segments peut être réalisée par éclissage.

Dans l'exemple illustré, l'arceau additionnel 82 présente sensiblement une section en 1 et est principalement formé d'une âme 106a s'étendant sensiblement selon un plan orthogonal à l'axe longitudinal 17 du turbomoteur, ainsi qu'une semelle intérieure 106b et une semelle extérieure 106c raccordées respectivement à des bords intérieur et extérieur de l'âme 106a de l'arceau additionnel 82 et prenant la forme de portions de cylindre de révolution d'axes respectifs confondus avec l'axe longitudinal 17 du turbomoteur. Dans cet exemple, la semelle extérieure 106c s'étend de manière continue d'une extrémité à l'autre de l'arceau additionnel 82, tandis que la semelle intérieure 106b comprend deux portions disjointes 108 et 110 s'étendant respectivement depuis les deux extrémités opposées de l'arceau additionnel en direction d'une partie médiane de celui-ci.

De plus, comme le montrent les figures 3 et 4b, l'arceau additionnel 82 comporte une portion de raccord 112 formée en saillie vers l'avant selon la direction axiale depuis la portion 100 d'attache moteur centrale arrière intégrée à cet arceau additionnel. Cette portion de raccord 112 présente une face d'extrémité 114 plane s'étendant orthogonalement à l'axe longitudinal 17 du turbomoteur, et destinée à être fixée sur une face d'extrémité correspondante de la poutre longitudinale 72 de sorte que la portion de raccord 112 précitée prolonge ladite poutre.

Par ailleurs, le carénage aérodynamique externe 16 comporte une peau structurale 30a (figures 2a, 2b, et 5), qui présente une forme aérodynamique sensiblement semi-cylindrique de révolution, et qui est fixée sur la sous-structure rigide 28.

Il est à noter que la peau structurale 30a présente une concavité orientée en direction de l'axe longitudinal 17 du turbomoteur 12 lorsque l'ensemble propulsif 10 est vu en coupe selon un plan transversal, c'est-à-dire orthogonal à la direction longitudinale X, tel que le plan transversal P visible sur la figure 3.

Dans l'exemple illustré, la peau structurale 30a présente une étendue circonférentielle égale à 190 degrés environ autour de l'axe longitudinal 17, lorsque l'ensemble propulsif 10 est vu en coupe selon un plan transversal tel que le plan P de la figure 3. Plus généralement, cette étendue circonférentielle est préférentiellement comprise entre 90 degrés et 230 degrés.

De manière préférentielle, la peau structurale 30a est agencée majoritairement au-dessus de l'axe longitudinal 17 du turbomoteur, lorsque l'aéronef 8 est stationné au sol. Plus précisément, cette peau structurale 30a est de préférence intégralement comprise dans une région R de l'espace, visible sur la figure 4a, délimitée par deux demi-plans P1, P2 délimités chacun par l'axe longitudinal 17 et s'étendant symétriquement de part et d'autre du plan longitudinal V. Dans ces conditions, ladite région R de l'espace est destinée à s'étendre au-dessus des demi-plans P1, P2. De plus, chacun des demi-plans P1, P2 forme un angle β avantageusement inférieur à 120 degrés avec le plan longitudinal V. Dans l'exemple illustré, l'angle β est ainsi égal à 105 degrés environ.

Le dispositif d'accrochage 14 comporte en outre une peau aérodynamique supérieure 30b présentant une forme aérodynamique sensiblement plane et s'étendant latéralement dans un prolongement de la peau structurale 30a précitée de manière à recouvrir une face supérieure de la structure rigide d'accrochage 18 (figures 2a, 2b, et 5).

La peau structurale 30a et la peau aérodynamique supérieure 30b sont réalisées en un matériau composite de type thermodurcissable ou thermoplastique, mais peuvent en variante être réalisées en métal. Dans le cas d'un matériau thermodurcissable, ces peaux peuvent en particulier être réalisées au moyen d'une machine de dépose automatique, selon un procédé connu de l'homme du métier utilisé pour la réalisation de panneaux de fuselage à simple ou double courbure.

Outre la peau structurale 30a, le carénage aérodynamique externe 16 comporte également un capot inférieur 32, une entrée d'air 34, et des panneaux complémentaires 36 (figures 2a et 2b).

Le capot inférieur 32 comporte une extrémité distale 42 articulée sur une extrémité distale 44 de la sous-structure rigide 28, ainsi qu'une extrémité proximale 46 pourvue de moyens de raccordement à la structure rigide d'accrochage 18. Le capot inférieur 32 est ainsi déplaçable entre une position d'ouverture, illustrée sur les figures 2a et 2b, dans laquelle l'extrémité proximale 46 du capot inférieur est détachée de la structure rigide d'accrochage 18, et une position de fermeture, dans laquelle l'extrémité proximale 46 du capot inférieur est raccordée à cette structure rigide d'accrochage 18.

L'entrée d'air 34 est raccordée à une extrémité avant de la sous-structure rigide 28. Cette entrée d'air 34 comporte une peau externe 48 globalement annulaire centrée par rapport à l'axe longitudinal 17 du turbomoteur et prolongeant la peau structurale 30a ainsi que le capot inférieur 32 lorsque ce dernier est en position de fermeture. L'entrée d'air 34 comporte également une peau interne 50 globalement annulaire délimitant extérieurement un conduit d'entrée d'air du turbomoteur 12.

Chacun des panneaux complémentaires 36 précités est raccordé à un ou plusieurs éléments du dispositif d'accrochage 14, parmi la peau structurale 30a, les carénages de bord d'attaque 20 et de bord de fuite 22, le capot inférieur 32 et l'entrée d'air 34, de manière à combler des espaces entre ces éléments.

Par ailleurs, la fixation de la peau structurale 30a sur la sous-structure rigide 28 est réalisée par boulonnage ou rivetage de cette peau structurale 30a sur les semelles extérieures 81c, 106c respectives des arceaux 62, 64, du demi-arceau 74 et de l'arceau additionnel 82 de la sous-structure rigide 28.

D'une manière analogue, la fixation de la peau aérodynamique supérieure 30b sur la structure rigide d'accrochage 18 est réalisée par boulonnage ou rivetage de cette peau aérodynamique supérieure 30b sur les semelles supérieures 61c respectives des longerons 52, 54, 56 de la structure rigide d'accrochage 18.

Les éléments qui forment la sous-structure rigide 28, notamment les arceaux avant 62 et arrière 64 ainsi que la poutre longitudinale 72 et le demi-arceau médian 74, sont dimensionnés de sorte qu'une partie des efforts induits par le turbomoteur 12 soit transmise de ce turbomoteur à la structure rigide d'accrochage 18 par l'intermédiaire de la peau structurale 30a du carénage aérodynamique externe 16. Ce dimensionnement vise ainsi à limiter la rigidité des éléments formant la sous-structure rigide 28, par exemple en limitant la section de ces éléments, et/ou en limitant le module de Young par un choix adéquat du ou des matériaux formant ces éléments. De plus, les éléments précités qui forment la sous-structure rigide 28 ainsi que la structure rigide d'accrochage 18 sont dimensionnés de sorte qu'une partie des efforts induits par le turbomoteur 12 soit transmise à la structure rigide d'accrochage 18 par l'intermédiaire de la peau aérodynamique supérieure 30b.

Comme illustré sur la figure 5, le dessous de la structure rigide d'accrochage 18 est caréné par une peau aérodynamique inférieure 116 du dispositif d'accrochage 14, fixée sur les semelles inférieures 61b respectives des longerons de la structure rigide d'accrochage 18. Cette peau inférieure 116 est pourvue d'ouvertures de visite 118 permettant l'accès à l'intérieur de l'ensemble propulsif 10 et munies de capots amovibles, non représentés sur les figures. La nervure de fermeture 60 de la structure rigide d'accrochage 18 comporte également de telles ouvertures de visite 118.

De plus, le dispositif d'accrochage 14 comporte une peau intérieure 120 fixée sur les semelles intérieures 81b respectives des arceaux avant 62 et arrière 64 et du demi-arceau médian 74. Cette peau intérieure 120 forme un panneau de renfort participant à la rigidification de la sous-structure rigide 28.

La liaison entre la sous-structure rigide 28 et le turbomoteur 12 est réalisée par une pluralité de premières chapes destinées à l'accrochage d'éléments dissipateurs d'énergie mécanique, dénommés amortisseurs dans ce qui suit, ainsi qu'une pluralité de secondes chapes destinées à l'accrochage d'attaches moteur, et la portion 100 d'attache moteur centrale arrière intégrée à l'arceau additionnel 82.

La pluralité de premières chapes comprend les trois chapes 96a, 96b, 96c déjà décrites de l'arceau avant 62, ainsi que deux chapes portées par l'arceau arrière 64 dont l'une 122a est située au niveau d'un sommet de l'arceau tandis que l'autre 122b est située au niveau de l'extrémité distale 66b de l'arceau, ainsi encore qu'une chape 124 portée par la poutre longitudinale 72 et située entre l'arceau avant 62 et le demi-arceau médian 74. Ces premières chapes présentent chacune un axe parallèle à l'axe longitudinal 17 du turbomoteur.

Il est à noter que les premières chapes 96c et 122b, qui appartiennent respectivement aux arceaux avant 62 et arrière 64, forment, selon la terminologie de l'invention, des parties d'accrochage distales, agencées du même côté que l'extrémité distale 66b de chaque arceau par rapport au plan longitudinal V.

Comme visible à la figure 4a, les parties d'accrochage distales 96c et 122b précitées s'étendent chacune à l'extérieur d'un secteur angulaire d'angle θ2 égal à 80 degrés environ s'étendant à partir de la deuxième demi-droite D2 décrite ci-dessus en direction de l'extrémité distale 66b de l'arceau correspondant. L'angle θ2 précité est ,de préférence, compris entre 25 degrés et 100 degrés.

De plus, la première chape 96b appartenant à l'arceau avant 62 forme, selon la terminologie de l'invention, une partie d'accrochage proximale, agencée du même côté que l'extrémité proximale 66a de l'arceau et que la structure rigide d'accrochage 18, par rapport au plan longitudinal V.

Sur la figure 4a, la partie d'accrochage proximale 96b précitée s'étend à l'extérieur d'un secteur angulaire d'angle θ3 égal à 80 degrés environ s'étendant à partir de la deuxième demi-droite D2 en direction de la structure rigide d'accrochage 18. L'angle θ3 précité est, de préférence, compris entre 25 degrés et 100 degrés.

La pluralité de secondes chapes comprend les deux chapes 98a et 98b formant les extrémités de l'arceau additionnel 82, ainsi qu'une chape 126 portée par la poutre longitudinale 72 et située sensiblement au niveau de l'extrémité avant de cette poutre, et une chape 128 portée conjointement par l'extrémité proximale du demi-arceau médian 74 et par l'extrémité distale 78 du longeron médian 54. Ces secondes chapes présentent chacune un axe parallèle à l'axe longitudinal 17 du turbomoteur, à l'exception de la chape 126 disposée à l'avant de la poutre longitudinale 72, qui présente un axe parallèle à la direction transversale Y.

Les premières et secondes chapes précitées s'étendent chacune en saillie radialement vers l'intérieur par rapport à l'axe longitudinal 17 du turbomoteur.

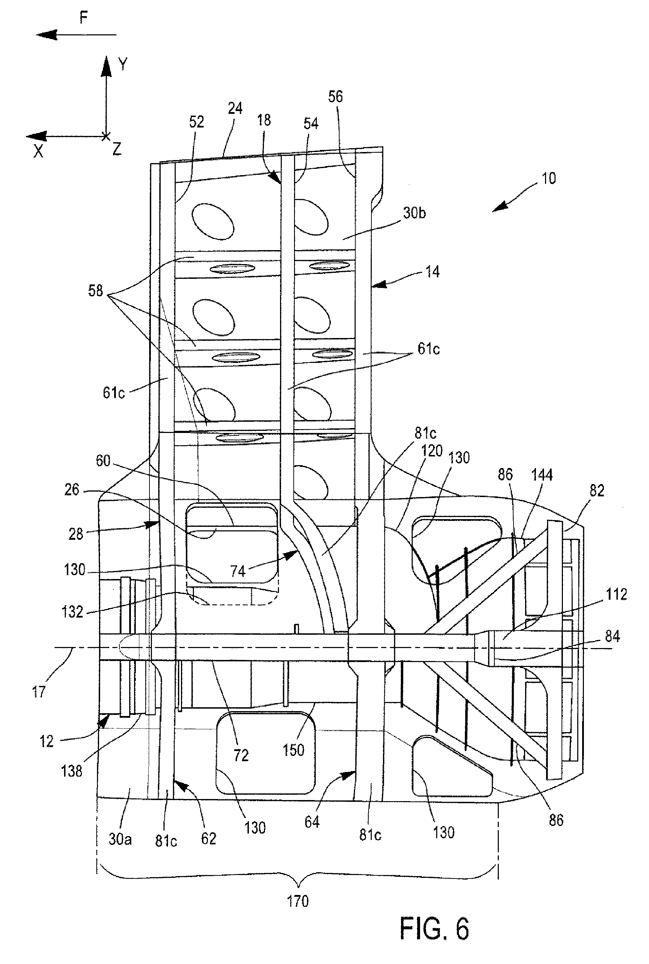

Comme visible à la figure 6, la peau structurale 30a comporte des ouvertures de visite 130 qui sont, par exemple, au nombre de quatre. Ces ouvertures de visite sont munies de capots amovibles, non représentés sur les figures. L'une des ses ouvertures de visite est formée en regard d'une ouverture de visite 132 ménagée dans la peau intérieure 120 du dispositif d'accrochage 14, et visible également sur la figure 5.

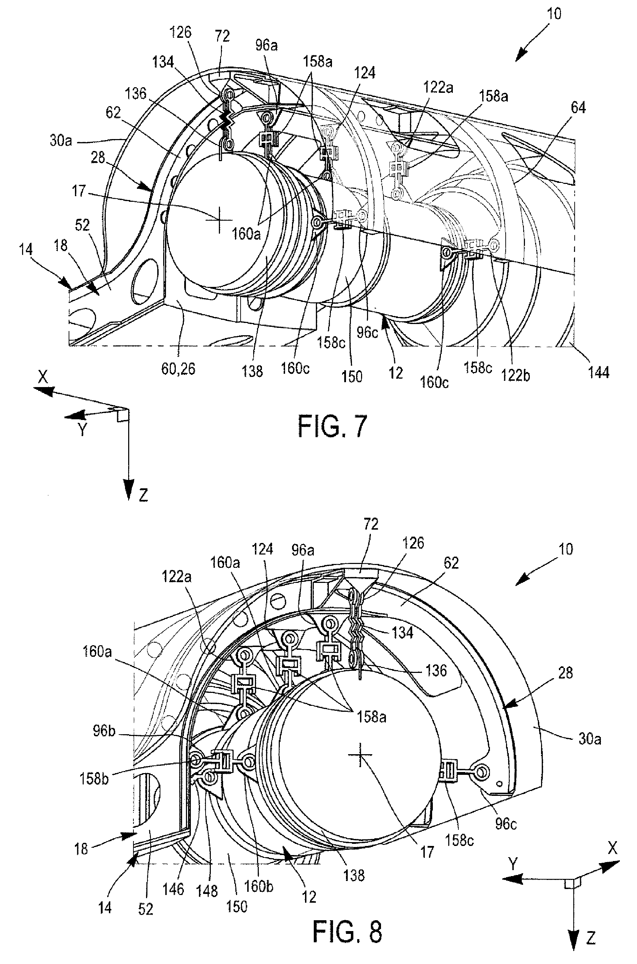

En référence aux figures 7 à 12, la manière dont le turbomoteur 12 est relié au dispositif d'accrochage 14 va maintenant être décrite.

Sur ces figures, les attaches moteur et les éléments dissipateurs d'énergie permettant la liaison du turbomoteur 12 à la sous-structure rigide 28 et à la structure rigide d'accrochage 18 sont illustrés par des symboles fonctionnels sans rapport avec la géométrie de ces éléments, étant entendu que ces éléments peuvent être d'un type connu, de sorte que leur structure ne sera pas décrite en détail dans ce qui suit.

Les figures 7 à 9 montrent tout d'abord une attache moteur supérieure avant 134 reliant la chape 126 portée par l'extrémité avant de la poutre longitudinale 72 à une chape 136 semblable portée par un carter avant 138 du turbomoteur 12. L'accrochage de cette attache moteur supérieure avant 134 sur les chapes 126 et 136 est tel que cette attache moteur transmette uniquement à la sous-structure rigide 28 les efforts orientés selon la direction verticale Z. A cet effet, la liaison de l'attache moteur supérieure avant 134 sur chacune des chapes 126, 136 précitées s'effectue au moyen d'une rotule.

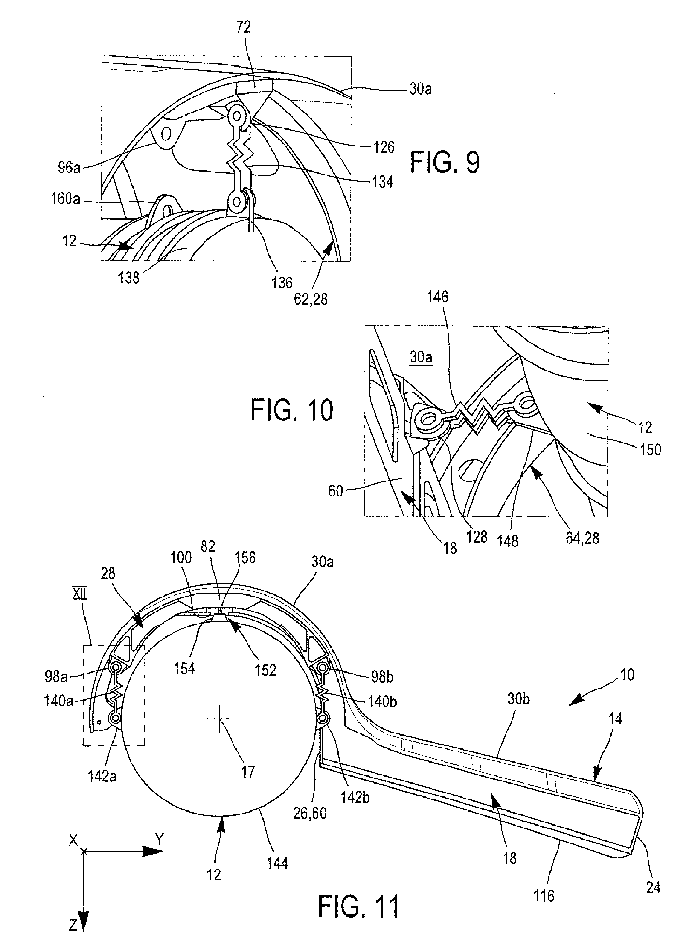

La reprise des efforts orientés selon la direction verticale Z est également assurée par deux attaches moteur latérales arrière 140a et 140b visibles sur la figure 11, reliant respectivement les chapes 98a et 98b formant les extrémités latérales de l'arceau additionnel 82, à des chapes 142a et 142b d'axes respectifs parallèles à l'axe longitudinal 17 du turbomoteur 12 et formées en saillie radialement vers l'extérieur sur un carter arrière 144 de ce turbomoteur. Ces attaches moteur latérales arrière 140a et 140b sont également reliées aux chapes précitées par des rotules permettant d'éviter la reprise des efforts orientés selon les directions longitudinale X et transversale Y.

Les figures 8 et 10 permettent de distinguer une attache moteur latérale avant 146 reliant la chape 128 portée par l'extrémité proximale du demi-arceau médian 74 à une chape 148 d'axe parallèle à l'axe longitudinal 17 du turbomoteur et formée en saillie radialement vers l'extérieur sur un carter 150 du turbomoteur 12 disposé entre les carters avant 138 et arrière 144 précités. L'accrochage de cette attache moteur latérale avant 146 sur les chapes 128 et 148 est tel que cette attache moteur transmette uniquement à la sous-structure rigide 28 et à la structure rigide d'accrochage 18 les efforts orientés selon la direction transversale Y. A cet effet, cette attache moteur latérale avant 146 est reliées aux chapes 128 et 148 par des rotules.

Les attaches moteur 134, 140a, 140b et 146 décrites ci-dessus prennent par exemple la forme de bielles ou de manilles.

De plus, ces attaches moteur sont de préférence d'un type dit souple, c'est-à-dire comprenant des moyens élastiques permettant un déplacement relatif des extrémités de l'attache moteur.

La reprise des efforts orientés selon la direction transversale Y est également assurée par une attache moteur centrale arrière 152 (figure 11) comprenant la portion 100 d'attache moteur intégrée à l'arceau additionnel 82, ainsi qu'une ferrure 154 formée sur une partie de sommet du carter arrière 144 et munie d'un pion de cisaillement 156 d'axe vertical passant par l'axe longitudinal 17 du turbomoteur. Ce pion de cisaillement 156, couramment dénommé *spigot,* s'étend en saillie vers le haut, et présente une partie supérieure insérée de manière ajustée dans l'alésage 102 (figure 4b) de la portion 100 d'attache moteur intégrée à l'arceau additionnel 82. L'ajustement serré du pion de cisaillement 156 dans l'alésage 102 permet à l'attache moteur centrale arrière 152 de reprendre non seulement les efforts transversaux précités mais également les efforts de poussée du turbomoteur 12, c'est-à-dire les efforts orientés selon la direction longitudinale X. Le pion de cisaillement 156 est monté avec un jeu selon l'axe de l'alésage 102 de manière à éviter la reprise des efforts orientés selon la direction verticale Z. De plus, l'alésage 102 est formé dans une rotule (non représentée sur les figures) elle-même intégrée la portion 100 d'attache moteur intégrée à l'arceau additionnel 82. Une telle liaison par rotule permet d'éviter la transmission d'efforts ou moments liés à une rotation du pion de cisaillement 156.

Par ailleurs, la reprise du moment selon la direction verticale Z est assurée conjointement par l'attache moteur latérale avant 146 et par l'attache moteur centrale arrière 152.

La reprise du moment selon la direction transversale Y est assurée conjointement par l'attache moteur supérieure avant 134 et par les attaches moteur latérales arrière 140a et 140b.

Enfin, la reprise du moment selon la direction longitudinale X est assurée par les attaches moteur latérales arrière 140a et 140b.

Comme visible sur les figures 7 et 8, six éléments dissipateurs d'énergie mécanique 158a, 158b, 158c, ou amortisseurs, destinés à l'amortissement des vibrations du turbomoteur 12, relient respectivement les chapes 96a, 96b, 96c, 124, 122a, 122b portées par la sous-structure rigide 28 à des chapes 160a, 160b, 160c disposées sur les carters 138 et 150 du turbomoteur 12.

Les deux amortisseurs 158c qui sont respectivement reliés à la chape 96c agencée au niveau de l'extrémité distale 66b de l'arceau avant 62, et à la chape 122b agencée au niveau de l'extrémité distale 66b de l'arceau arrière 64, constituent chacun un élément de liaison distal qui relie le turbomoteur à l'arceau correspondant, dans la terminologie propre à l'invention.

D'une manière analogue, l'amortisseur 158b relié à la chape 96b agencée au niveau de l'extrémité proximale de l'arceau avant 62 constitue un élément de liaison proximal qui relie le turbomoteur à l'arceau avant 62.

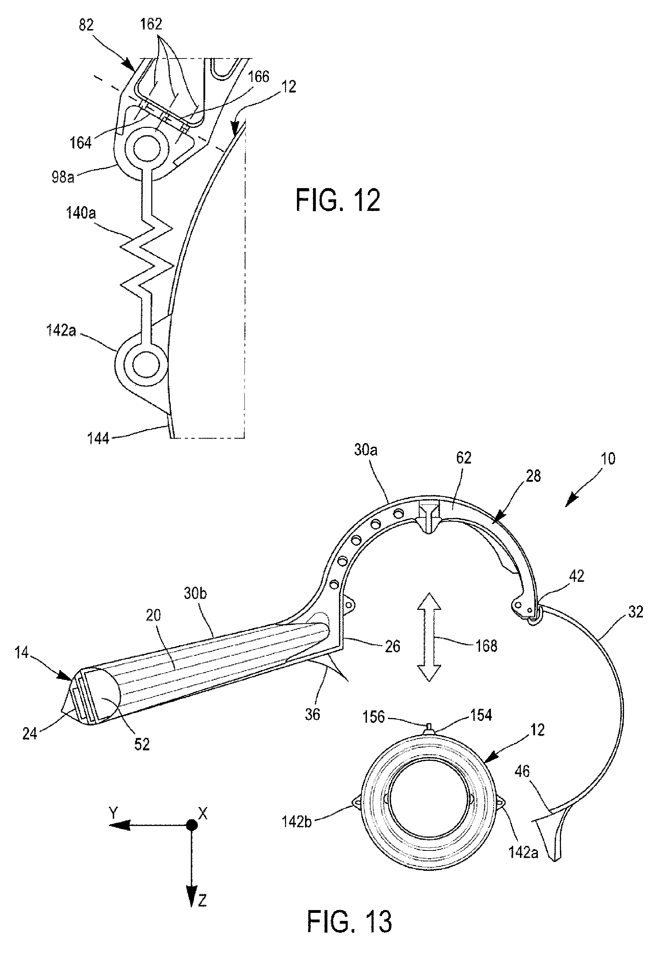

Comme l'illustre la figure 12, la chape 98a qui forme l'une des extrémités de l'arceau additionnel 82, et qui permet l'accrochage de l'attache moteur latérale arrière 140a, est fixée sur l'arceau additionnel 82 par des moyens de fixation démontables tels que des boulons, dont seuls les axes respectifs 162 sont représentés. Il en est de même en ce qui concerne la chape 98b formant l'autre extrémité de l'arceau additionnel 82. A cet effet, ces deux chapes 98a, 98b présentent chacune une platine 164 appliquée sur une platine d'extrémité 166 de l'arceau additionnel 82, ces platines, également visibles sur la figure 4b, comportant des orifices respectifs alignés pour le passage des boulons précités.

Les autres chapes 126 et 128 portées par la sous-structure rigide 28 et destinées à l'accrochage d'attaches moteur sont également fixées à l'élément correspondant de cette sous-structure rigide par des moyens de fixation démontables.

Le mode de fixation par des moyens de fixation démontables des chapes destinées à l'accrochage des attaches moteur permet un accrochage/décrochage du turbomoteur 12 à/du dispositif d'accrochage 14, non pas par montage/démontage des axes de chaque attache moteur, mais par montage/démontage de la chape correspondante de chaque attache moteur sur/de la sous-structure rigide 28.

De manière analogue, les chapes 96a-96c, 122a, 122b, et 124, qui sont destinées à l'accrochage des amortisseurs 158, sont de préférence également fixées à l'élément correspondant de la sous-structure rigide 28 par des moyens de fixation démontables.

Il est à noter que l'ensemble des attaches moteur 134, 140a, 140b, 146, 152 et des amortisseurs 158 ainsi que la sous-structure rigide 28 forment conjointement des moyens de liaison du turbomoteur 12 à la structure rigide d'accrochage 18, dans la terminologie propre à l'invention,

Comme l'illustre schématiquement la figure 13, l'accrochage du turbomoteur 12 au dispositif d'accrochage 14, de même que la dépose de ce turbomoteur 12, peuvent être effectués par un déplacement du turbomoteur 12 en translation uniquement selon la direction verticale, symbolisé par la flèche 168. Il est à noter que le turbomoteur 12 est représenté sans ses attaches moteur 134, 140a et 140b sur la figure 13, par souci de clarté.

Ce mode d'accrochage et de dépose du turbomoteur, qui présente donc l'avantage de ne pas nécessiter plusieurs translations successives selon des directions différentes, est facilité par le fait que les moyens de liaison du turbomoteur 12 à la structure rigide d'accrochage 18 sont intégralement compris dans la région R de l'espace définie ci-dessus (figure 4a).

En particulier, il est à noter qu'aucune attache moteur n'est reliée à une partie inférieure du turbomoteur 12. Il en est de même en ce qui concerne les amortisseurs 158. Plus précisément, aucune des attaches moteur n'est intégralement située dans un demi-espace défini sous un plan passant par l'axe longitudinal 17 et parallèle à la direction transversale Y. En effet, toutes les attaches moteur sont comprises dans un demi-espace défini au-dessus du plan précité, à l'exception de l'attache moteur latérale avant 146 qui est partagée, par le plan précité, en deux parties sensiblement symétriques l'une de l'autre.

Par ailleurs, la figure 6 illustre une zone 170, couramment appelée « zone *UERF »,* définie comme la zone susceptible d'être impactée par une aube du turbomoteur 12 en cas d'arrachement d'une telle aube.

Il apparaît sur cette figure 6 que l'arceau additionnel 82 est situé hors de la zone *UERF* 170. De ce fait, les attaches moteur latérales arrière 140a, 140b ainsi que l'attache moteur centrale arrière 152 sont à l'abri d'un impact d'aube.

De plus, l'attache moteur supérieure avant 134 étant conçue pour une reprise des efforts verticaux uniquement, cette attache moteur présente un débattement selon la direction transversale Y au niveau des chapes 126 et 136 (figure 9) auxquelles cette attache moteur est reliée. Toutefois, en cas de destruction accidentelle de l'attache moteur latérale avant 146 destinée à la reprise des efforts transversaux et participant à la reprise du moment selon la direction verticale Z, l'attache moteur supérieure avant 134 tend naturellement, dans ses déplacements selon la direction transversale Y, à venir en butée dans les chapes 126 et 136, et se substitue ainsi à l'attache moteur déficiente pour assurer la reprise du moment selon la direction verticale Z conjointement avec les attaches moteur latérales arrière 140a et 140b situées hors de la zone *UERF* 170.

D'une manière analogue, l'attache moteur latérale avant 146 destinée à la reprise des efforts selon la direction transversale Y présente un débattement selon la direction verticale Z au niveau des chapes 128 et 148 (figure 10) auxquelles cette attache moteur est reliée. Toutefois, en cas de destruction accidentelle de l'attache moteur supérieure avant 134 destinée à la reprise des efforts verticaux et participant à la reprise du moment selon la direction transversale Y, l'attache moteur latérale avant 146 tend naturellement, dans ses déplacements verticaux, à venir en butée dans les chapes 128 et 148, et se substitue ainsi à l'attache moteur déficiente pour assurer la reprise du moment selon la direction transversale Y conjointement avec les attaches moteur latérales arrière 140a et 140b situées hors de la zone *UERF* 170.

La configuration de l'ensemble propulsif 10 permet ainsi de satisfaire les exigences réglementaires en matière de risque de perte d'aube, tout en évitant l'utilisation d'attaches moteur supplémentaires, dites « en attente », qui ne participent pas à la reprise d'efforts en fonctionnement normal du turbomoteur.

En variante, les longerons 52, 54, 56 et/ou les nervures 58, 60 de la structure rigide d'accrochage 18 peuvent ne pas être en métal mais en un matériau composite.

En variante encore, la structure rigide d'accrochage 18 peut ne pas comporter de longerons et de nervures, mais être une structure alvéolaire, également dénommée en nids d'abeilles, ou être formée d'une mousse solide.

En outre, la peau structurale 30a peut présenter une étendue circonférentielle inférieure à l'étendue circonférentielle de la sous-structure rigide 28. Cette dernière n'est alors que partiellement recouverte par la peau structurale 30a.

Par ailleurs, bien que le capot inférieur 32 décrit ci-dessus ne remplisse qu'une fonction aérodynamique et ne participe pas à la transmission des efforts induits par le turbomoteur, il est possible en variante de dimensionner ce capot inférieur 32 et les éléments constituants le dispositif d'accrochage 14 de sorte que le capot inférieur 32 joue un rôle structural, c'est-à-dire participe à la transmission des efforts induits par le turbomoteur, en particulier à la transmission du moment de torsion selon la direction longitudinale X.

D'autre part, la portion d'attache moteur 100 incluant l'alésage 102 peut ne pas être intégrée dans l'arceau additionnel 82 mais prendre la forme d'une ferrure rapportée sur cet arceau additionnel et intégrant l'alésage 102.

De plus, l'attache moteur supérieure avant 134 peut être remplacée ou complétée par un actionneur linéaire pour permettre de modifier l'inclinaison de l'axe longitudinal du turbomoteur 12 par rapport à la direction horizontale. Une telle modification de l'inclinaison est facilitée par le fait que l'attache moteur centrale arrière 152 intègre une rotule, comme expliqué ci-dessus.

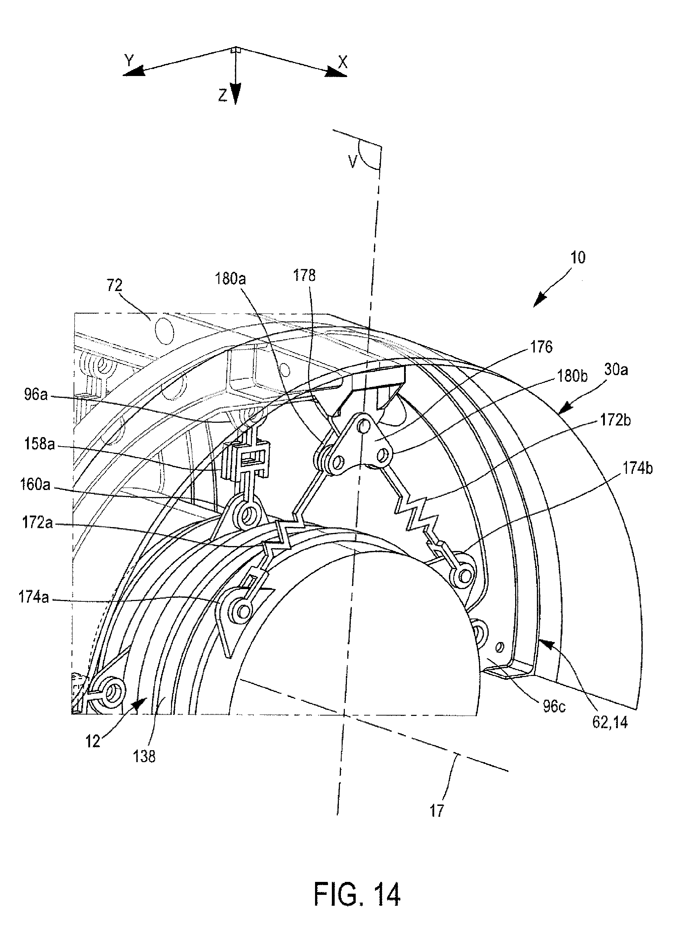

La figure 14 illustre un ensemble propulsif 10 selon un autre mode de réalisation de l'invention, dans lequel le dispositif d'accrochage 14 ne comporte pas d'attache moteur latérale avant telle que l'attache moteur 146 décrite ci-dessus, mais comporte deux attaches moteur supérieures avant 172a et 172b reliant respectivement deux chapes 174a, 174b solidaires du carter avant 138 du turbomoteur 12 à un palonnier 176 lui-même accroché à une ferrure 178 portée par la poutre longitudinale 72. Les deux chapes 174a, 174b précitées sont agencées de part et d'autre du plan longitudinal V, de sorte que les deux attaches moteur supérieures avant 172a et 172b soient agencées sensiblement selon une configuration en « V » inversé. Le palonnier 176 présente deux chapes 180a, 180b également agencées de part et d'autre du plan longitudinal V, respectivement dans l'alignement des deux chapes 174a, 174b solidaires du carter avant 138. Chacune des attaches moteur supérieures avant 172a et 172b est reliée à la chape 174a, 174b correspondante du carter avant 138 par une liaison rotule, et à la chape 180a, 180b correspondante du palonnier 176 par une liaison pivot. De plus, le palonnier est lui-même relié à la ferrure 178 portée par la poutre longitudinale 72 par une liaison rotule présentant un jeu selon la direction longitudinale X.

Les deux attaches moteur supérieures avant 172a et 172b permettent ainsi conjointement une reprise des efforts orientés selon la direction verticale Z ainsi que des efforts orientés selon la direction transversale Y.

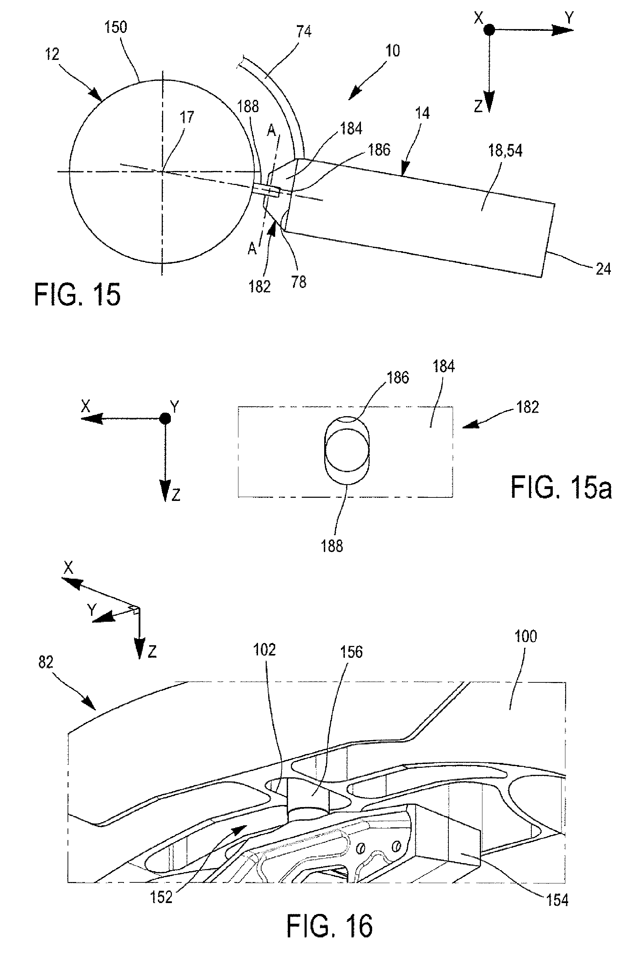

Les figures 15 à 16 illustrent un ensemble propulsif 10 selon un autre mode de réalisation de l'invention, dans lequel le dispositif d'accrochage 14 comporte une attache moteur latérale 182 dédiée à la reprise des efforts orientés selon la direction longitudinale X, et non pas à la reprise des efforts selon la direction transversale Y comme dans les modes de réalisation décrits ci-dessus.

Cette attache moteur latérale 182 comporte une ferrure 184 fixée sur la structure rigide d'accrochage 18, par exemple sur l'extrémité distale 78 du longeron médian 54. Cette ferrure 184 comporte un alésage 186 dans lequel est inséré un pion de cisaillement 188, ou *spigot,* solidaire du carter 150 du turbomoteur. L'alésage 186 présente une forme allongée selon la direction verticale Z (figure 15a) de sorte que le pion de cisaillement 188 soit bloqué dans l'alésage 186 dans la direction longitudinale X mais libre de se déplacer selon la direction verticale Z.

Dans ce mode de réalisation, il n'est pas nécessaire que l'attache moteur centrale arrière 152 participe à la reprise des efforts longitudinaux, de sorte que celle-ci peut être dédiée uniquement à la reprise des efforts selon la direction transversale Y. Dans ce cas, comme l'illustre la figure 16, l'alésage 102 de cette attache moteur centrale arrière 152 peut être allongé selon la direction longitudinale de sorte que le pion de cisaillement 156 correspondant soit bloqué dans la direction transversale Y mais pas dans la direction longitudinale X.

De plus, dans ce mode de réalisation, l'attache moteur avant est de préférence du même type que celle de la figure 14 décrite ci-dessus, afin d'assurer la reprise des efforts orientés selon la direction verticale Z ainsi que la reprise des efforts orientés selon la direction transversale Y.

Par ailleurs, en variante, la reprise des efforts longitudinaux peut être assurée par deux bielles de poussée d'un type connu, présentant chacune une extrémité arrière reliée au carter arrière 144 du turbomoteur et une extrémité avant reliée à l'extrémité distale 26 de la structure d'accrochage 18.

Dans ce cas, la reprise des efforts transversaux peut être assurée par une attache moteur latérale du même type que l'attache moteur 146 décrite ci-dessus en référence aux figures 7 à 12. De plus, l'attache moteur avant supérieure peut alors être dédiée à la reprise des efforts verticaux comme dans le premier mode de réalisation décrit ci-dessus, et peut donc être du même type que l'attache moteur avant supérieure 134 décrite ci-dessus (figure 9).

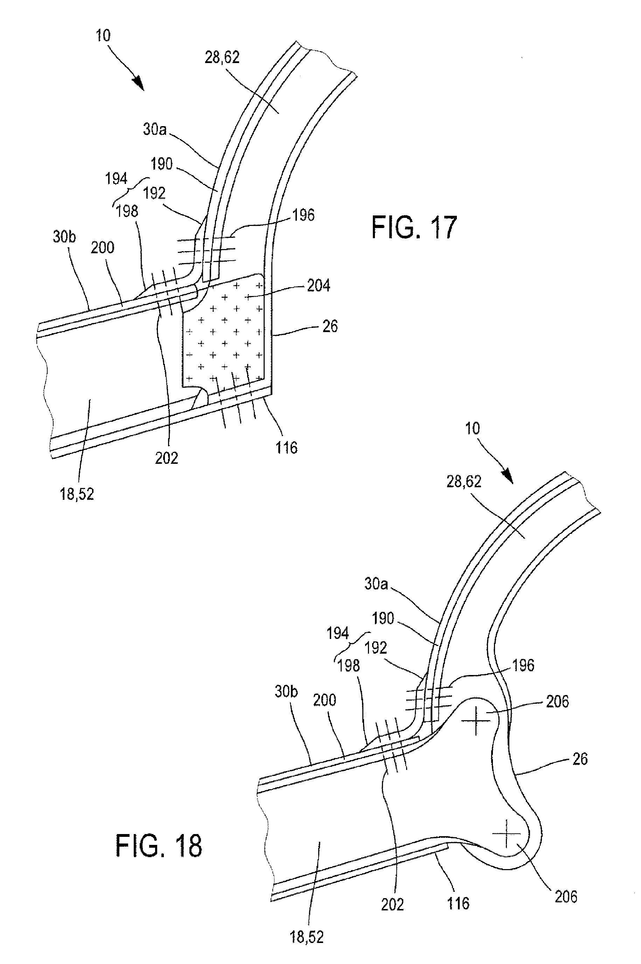

La figure 17 illustre un ensemble propulsif 10 selon un autre mode de réalisation de l'invention, dans lequel la peau structurale 30a et la peau aérodynamique supérieure 30b présentent globalement la même conformation que dans les modes de réalisation décrits ci-dessus, mais ne sont en revanche pas réalisées d'un seul tenant. Ces deux peaux 30a, 30b sont ici éclissées l'une à l'autre. La peau structurale 30a présente une portion d'extrémité proximale 190 sur laquelle est appliquée une première portion 192 d'une éclisse 194, par exemple au moyen de boulons ou rivets dont seuls les axes 196 sont représentés sur la figure 17. L'éclisse 194 comprend une seconde portion 198 appliquée sur une extrémité distale 200 de la peau aérodynamique supérieure 30b, également au moyen de boulons ou rivets d'axes 202. L'éclisse 194 s'étend de préférence sur toute la longueur de la structure rigide d'accrochage 18.

Dans l'exemple de la figure 17, les longerons 52, 54, 56 de la structure rigide d'accrochage 18 sont fixés respectivement à l'arceau avant 62, au demi-arceau médian 74, et à l'arceau arrière 64, soit directement au moyen de boulons ou rivets (non représentés) d'axes 204, soit par l'intermédiaire d'une éclisse.

En variante, comme l'illustre la figure 18, les longerons 52, 54, 56 peuvent être reliés respectivement à l'arceau avant 62, au demi-arceau médian 74, et à l'arceau arrière 64, par des chapes respectives 206.

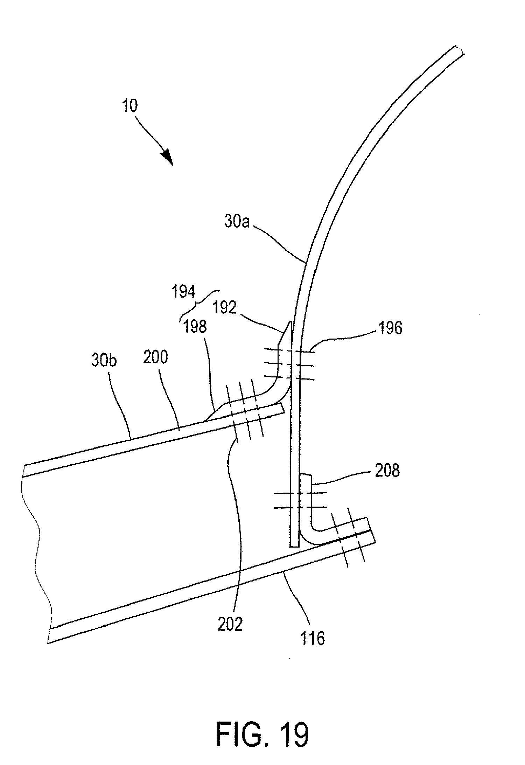

Dans tous les cas, comme l'illustre la figure 19, la peau structurale 30a peut être prolongée vers le bas entre chaque paire de longerons successifs de la structure rigide d'accrochage 18, de manière à permettre la fixation de cette peau structurale 30a par éclissage sur la peau inférieure 116 du dispositif d'accrochage 14. Un tel éclissage est par exemple réalisé au moyen de deux éclisses 208 (seule l'une étant visible sur la figure 19), dont la première est disposée entre le longeron avant 52 et le longeron médian 54, tandis que la seconde est disposée entre le longeron médian 54 et le longeron arrière 56. Dans l'exemple illustré, ces éclisses 208 sont appliquées sur la face radialement interne de la peau structurale 30a, mais ces éclisses 208 peuvent en variante être appliquées sur la face radialement externe de celle-ci.

L'invention peut bien entendu être transposée à d'autres types de turbomoteurs, notamment à un turboréacteur comprenant un doublet d'hélices contrarotatives non carénées montées à l'avant. Dans ce cas, l'agencement du dispositif d'accrochage 14 peut être inversé selon la direction longitudinale, l'arceau additionnel 82 étant alors disposé à l'avant.

## Revendications

1. Ensemble propulsif (10) pour aéronef, comprenant un turbomoteur (12) présentant un axe longitudinal (17) parallèle à une direction longitudinale (X) dudit turbomoteur, ainsi qu'un dispositif (14) d'accrochage du turbomoteur destiné à être rapporté latéralement sur une structure (11) d'aéronef, ledit dispositif d'accrochage (14) comprenant une structure rigide d'accrochage (18) qui présente une extrémité proximale (24) destinée à être raccordée à la structure d'aéronef (11) et une extrémité distale (26) agencée en regard du turbomoteur (12), ladite structure rigide d'accrochage (18) portant des moyens de liaison (28, 134, 140a, 140b, 146, 152, 172a, 172b, 182, 158a, 158b, 158c) reliant ledit turbomoteur (12) à ladite structure rigide d'accrochage (18),
dans lequel :
- lesdits moyens de liaison comportent au moins un arceau (62, 64) présentant une extrémité proximale (66a) raccordée à ladite structure rigide d'accrochage (18) et une extrémité distale opposée (66b);
- ledit arceau (62, 64) présente une concavité orientée vers ledit axe longitudinal (17);
- lesdites extrémités proximale (66a) et distale (66b) dudit arceau (62, 64) s'étendent de part et d'autre d'un plan longitudinal (V) incluant ledit axe longitudinal (17) et destiné à s'étendre verticalement lorsque ledit ensemble propulsif (10) équipe un aéronef stationné au sol ; et
- lorsque ledit arceau (62, 64) est vu en coupe selon un plan transversal (P) orthogonal audit axe longitudinal (17), une première demi-droite (D1), partant dudit axe longitudinal (17) et passant par l'extrémité distale (66b) dudit arceau (62, 64), délimite un secteur angulaire, d'angle (θ1) compris entre 45 degrés et 120 degrés, avec une deuxième demi-droite (D2) partant dudit axe longitudinal (17), comprise dans ledit plan longitudinal (V), et interceptant ledit arceau (62, 64),
ledit ensemble propulsif étant **caractérisé en ce que** lesdits moyens de liaison comprennent un élément de liaison distal (158c) reliant le turbomoteur (12) à une partie d'accrochage distale (96c, 122b) dudit arceau (62, 64) et agencé du même côté que ladite extrémité distale (66b) dudit arceau par rapport audit plan longitudinal (V), ladite partie d'accrochage distale (96c, 122b) étant agencée de sorte que lorsque ledit arceau (62, 64) est vu en coupe selon ledit plan transversal (P), ladite partie d'accrochage distale (96c, 122b) s'étend à l'extérieur d'un secteur angulaire qui :
- a pour sommet l'axe longitudinal (17),
- forme un angle (θ2) compris entre 25 degrés et 100 degrés,
- s'étend à partir de ladite deuxième demi-droite (D2) en direction de ladite extrémité distale (66b) dudit arceau (62, 64).

2. Ensemble propulsif selon la revendication 1, dans lequel lesdits moyens de liaison comprennent en outre un élément de liaison proximal (158b) reliant le turbomoteur (12) à une partie d'accrochage proximale (96b) dudit arceau (62), ladite partie d'accrochage proximale (96b) étant agencée de sorte que, lorsque ledit arceau (62, 64) est vu en coupe selon ledit plan transversal (P), ladite partie d'accrochage proximale (96b) s'étend à l'extérieur d'un secteur angulaire qui :
- a pour sommet l'axe longitudinal (17),
- forme un angle (θ3) compris entre 25 degrés et 100 degrés,
- s'étend à partir de ladite deuxième demi-droite (D2) en direction de ladite structure rigide d'accrochage (18).

3. Ensemble propulsif selon la revendication 1 ou 2, dans lequel ledit élément de liaison distal (158c) et/ou ledit élément de liaison proximal (158b) est un élément dissipateur d'énergie mécanique destiné à amortir des vibrations dudit turbomoteur (12).

4. Ensemble propulsif selon l'une quelconque des revendications 1 à 3, dans lequel :
- ladite structure rigide d'accrochage (18) prend la forme d'un caisson,
- ledit arceau (62, 64) s'étend dans le prolongement d'un longeron (52, 56) qui forme une première extrémité, selon la direction longitudinale (X), de ladite structure rigide d'accrochage (18),
- lesdits moyens de liaison comportent un autre arceau (64, 62) qui s'étend dans le prolongement d'un longeron (56, 52) formant une deuxième extrémité, opposée à ladite première extrémité, de ladite structure rigide d'accrochage (18),
- ledit autre arceau (64, 62) est à concavité orientée vers ledit axe longitudinal (17) du turbomoteur et présente une extrémité distale (66b) s'étendant du côté dudit plan longitudinal (V) opposé à ladite structure rigide d'accrochage (18), et
- lorsque ledit autre arceau (64, 62) est vu en coupe selon ledit plan transversal (P), une première demi-droite partant dudit axe longitudinal (17) et passant par l'extrémité distale (66b) dudit autre arceau (64, 62) délimite un secteur angulaire, d'angle compris entre 45 degrés et 120 degrés, avec une deuxième demi-droite partant dudit axe longitudinal (17), comprise dans ledit plan longitudinal (V), et interceptant ledit autre arceau (64, 62).

5. Ensemble propulsif selon l'une quelconque des revendications précédentes, dans lequel lesdits moyens de liaison comprennent une poutre longitudinale (72) qui est supportée par chaque arceau (62, 64) raccordé à ladite structure rigide d'accrochage (18).

6. Ensemble propulsif selon la revendication 5, dans lequel ladite poutre longitudinale (72) est centrée par rapport audit plan longitudinal (V) et supporte un arceau additionnel (82) décalé, selon la direction longitudinale (X), par rapport à ladite structure rigide d'accrochage (18), et centré par rapport audit plan longitudinal (V), ledit arceau additionnel (82) portant deux attaches moteur latérales (140a, 140b) agencées de part et d'autre dudit plan longitudinal (V) et conçues pour la reprise des efforts orientés selon une direction verticale (Z) parallèle audit plan longitudinal (V) et orthogonale à ladite direction longitudinale (X), ainsi qu'une attache moteur centrale (152) qui est centrée par rapport audit plan longitudinal (V) et conçue au moins pour la reprise des efforts orientés selon une direction transversale (Y) orthogonale auxdites directions longitudinale (X) et verticale (Z).

7. Ensemble propulsif selon la revendication 6, dans lequel ladite attache moteur centrale (152) portée par ledit arceau additionnel (82) est en outre conçue pour la reprise des efforts orientés selon la direction longitudinale (X).

8. Ensemble propulsif selon la revendication 6, dans lequel ladite structure rigide d'accrochage (18) porte à son extrémité distale (26) une attache moteur (182) conçue pour la reprise des efforts orientés selon la direction longitudinale (X).

9. Ensemble propulsif selon l'une quelconque des revendications 6 à 8, dans lequel ladite poutre longitudinale (72) porte une attache moteur (134) agencée, par rapport à ladite structure rigide d'accrochage (18), du côté longitudinal opposé audit arceau additionnel (82), et conçue au moins pour la reprise des efforts orientés selon la direction verticale (Z).

10. Ensemble propulsif selon la revendication 9, dans lequel ladite structure rigide d'accrochage (18) comporte à son extrémité distale (26) une attache moteur (146) conçue pour la reprise des efforts orientés selon la direction transversale (Y).

11. Ensemble propulsif selon la revendication 9, dans lequel ladite attache moteur (134), portée par ladite poutre longitudinale (72) et agencée du côté longitudinal opposé audit arceau additionnel (82), est en outre conçue pour la reprise des efforts orientés selon la direction transversale (Y).

12. Ensemble propulsif selon l'une quelconque des revendications précédentes, comprenant en outre un carénage aérodynamique externe (16), et dans lequel :
- ledit carénage aérodynamique externe (16) comprend une peau structurale (30a) qui recouvre et est fixée sur chaque arceau (62, 64) raccordé à ladite structure rigide d'accrochage (18), en s'étendant au moins jusqu'à l'extrémité distale (66b) de l'arceau, et
- lesdits moyens de liaison sont dimensionnés de sorte qu'une partie des efforts de liaison du turbomoteur (12) à ladite structure rigide d'accrochage (18) passe par ladite peau structurale (30a) du carénage aérodynamique externe (16).

13. Aéronef (8), **caractérisé en ce qu'**il comprend au moins un ensemble propulsif (10) selon l'une quelconque des revendications précédentes, dans lequel chaque arceau (62, 64) raccordé à ladite structure rigide d'accrochage (18) comporte une partie s'étendant au-dessus du turbomoteur (12) dudit ensemble propulsif (10) lorsque ledit aéronef est stationné au sol.

## Patentansprüche

1. Antriebseinheit (10) für ein Luftfahrzeug, die ein Triebwerk (12) mit einer Längsachse (17) parallel zu einer Längsrichtung (X) des Triebwerks sowie eine Befestigungsvorrichtung (14) des Triebwerks enthält, das dazu bestimmt ist, seitlich an eine Luftfahrzeugstruktur (11) angefügt zu werden, wobei die Befestigungsvorrichtung {14} eine steife Befestigungsstruktur (18) enthält, die ein proximales Ende (24), das dazu bestimmt ist, mit der Luftfahrzeugstruktur (11) verbunden zu werden, und ein distales Ende (26) hat, das gegenüber dem Triebwerk (12} angeordnet ist, wobei die steife Befestigungsstruktur (18) Verbindungseinrichtungen (28, 134, 140a, 140b, 146, 152, 172a, 172b, 182, 158a, 158b, 158c) trägt, die das Triebwerk (12) mit der steifen Befestigungsstruktur (18) verbinden,
wobei:
- die Verbindungseinrichtungen mindestens einen Bügel (62, 64) aufweisen, der ein mit der steifen Befestigungsstruktur (18) verbundenes proximales Ende (66a) und ein gegenüberliegendes distales Ende (66b) hat;
- wobei der Bügel (62, 64) eine zur Längsachse (17) gerichtete Konkavität hat;
- wobei das proximale (66a) und das distale (66b) Ende des Bügels (62, 64) sich zu beiden Seiten einer Längsebene (V) erstrecken, die die Längsachse (17) einschließt und dazu bestimmt ist, sich senkrecht zu erstrecken, wenn die Antriebseinheit (10) ein am Boden geparktes Luftfahrzeug ausstattet; und
- wenn der Bügel (62, 64) im Schnitt gemäß einer Querebene (P) orthogonal zur Längsachse (17) gesehen wird, eine erste Halbgerade (D1), die von der Längsachse (17) ausgeht und über das distale Ende (66b) des Bügels (62, 64) geht, einen Winkelsektor mit einem Winkel (θ1) zwischen 45 Grad und 120 Grad mit einer zweiten Halbgeraden (D2) ausgehend von der Längsachse (17) begrenzt, die in der Längsebene (V) enthalten ist und den Bügel (62, 64} schneidet,
wobei die Antriebseinheit **dadurch gekennzeichnet ist, dass** die Verbindungseinrichtungen ein distales Verbindungselement (158c) enthalten, das das Triebwerk (12) mit einem distalen Befestigungsteil (96c, 122b) des Bügels (62, 64) verbindet und auf der gleichen Seite wie das distale Ende (66b) des Bügels bezüglich der Längsebene (V) angeordnet ist, wobei der distale Befestigungsteil (96c, 122b) so angeordnet ist, dass, wenn der Bügel (62, 64) im Schnitt gemäß der Querebene {P) gesehen wird, der distale Befestigungsteil (96c, 122b) sich außerhalb eines Winkelsektors erstreckt, der:
- als Scheitel die Längsachse (17) hat,
- einen Winkel (θ2) zwischen 25 Grad und 100 Grad bildet,
- sich ausgehend von der zweiten Halbgeraden {D2} in Richtung des distalen Endes (66b) des Bügels (62, 64) erstreckt.

2. Antriebseinheit nach Anspruch 1, wobei die Verbindungseinrichtungen außerdem ein proximales Verbindungselement (158b) enthalten, das das Triebwerk (12) mit einem proximalen Befestigungsteil (96b) des Bügels (62) verbindet, wobei der proximale Befestigungsteil (96b) so angeordnet ist, dass, wenn der Bügel {62, 64} im Schnitt gemäß der Querebene (P) gesehen wird, der proximale Befestigungsteil (9Gb) sich außerhalb eines Winkelsektors erstreckt, der:
- als Scheitel die Längsachse (17) hat,
- einen Winkel (θ3) zwischen 25 Grad und 100 Grad bildet,
- sich ausgehend von der zweiten Halbgeraden (D2) in Richtung der steifen Befestigungsstruktur (18) erstreckt.

3. Antriebseinheit nach Anspruch 1 oder 2, wobei das distale Verbindungselement (158c) und/oder das proximale Verbindungselement (158b) ein Ableitungselement mechanischer Energie ist, das dazu bestimmt ist, Schwingungen des Triebwerks (12) zu dämpfen.

4. Antriebseinheit nach einem der Ansprüche 1 bis 3, wobei:
- die steife Befestigungsstruktur (18) die Form eines Rahmens annimmt,
- der Bügel (62, 64) sich in der Verlängerung eines Längsträgers (52, 56) erstreckt, der ein erstes Ende, gemäß der Längsrichtung (X), der steifen Befestigungsstruktur {18} bildet,
- die Verbindungseinrichtungen einen weiteren Bügel (64, 62) aufweisen, der sich in der Verlängerung eines Längsträgers (56, 52) erstreckt, der ein zweites Ende, gegenüber dem ersten Ende, der steifen Befestigungsstruktur (18) bildet,
- wobei der weitere Bügel (64, 62) eine zur Längsachse (17) des Triebwerks gerichtete Konkavität und ein distales Ende (66b) hat, das sich auf der Seite der Längsebene {V) gegenüber der steifen Befestigungsstruktur (18) erstreckt, und
- wenn der weitere Bügel (64, 62) im Schnitt gemäß der Querebene (P) gesehen wird, eine von der Längsachse (17) ausgehende und über das distale Ende {66b} des weiteren Bügels (64, 62) gehende erste Halbgerade einen Winkelsektor mit einem Winkel zwischen 45 Grad und 120 Grad mit einer zweiten Halbgeraden begrenzt, die von der Längsachse (17) ausgeht, in der Längsebene (V) liegt und den weiteren Bügel (64, 62) schneidet.

5. Antriebseinheit nach einem der vorhergehenden Ansprüche, wobei die Verbindungseinrichtungen einen Längsbalken (72) enthalten, der von jedem mit der steifen Befestigungsstruktur (18) verbundenen Bügel (62, 64) getragen wird.

6. Antriebseinheit nach Anspruch 5, wobei der Längsbalken (72) bezüglich der Längsebene (V} zentriert ist und einen zusätzlichen Bügel (82) trägt, der gemäß der Längsrichtung (X) bezüglich der steifen Befestigungsstruktur (18) versetzt und bezüglich der Längsebene (V) zentriert ist, wobei der zusätzliche Bügel (82) zwei seitliche Triebwerksaufhängungen (140a, 140b), die zu beiden Seiten der Längsebene (V) angeordnet und für die Aufnahme der Kräfte konzipiert sind, die gemäß einer senkrechten Richtung (Z) parallel zur Längsebene (V) und orthogonal zur Längsrichtung {X} ausgerichtet sind, sowie eine zentrale Triebwerksaufhängung (152) trägt, die bezüglich der Längsebene (V) zentriert und zumindest für die Aufnahme der Kräfte konzipiert ist, die gemäß einer Querrichtung (Y) orthogonal zur Längsrichtung (X) und senkrechten Richtung {Z} ausgerichtet sind.

7. Antriebseinheit nach Anspruch 6, wobei die vom zusätzlichen Bügel (82) getragene zentrale Triebwerksaufhängung (152) außerdem für die Aufnahme der gemäß der Längsrichtung (X) ausgerichteten Kräfte konzipiert ist.

8. Antriebseinheit nach Anspruch 6, wobei die steife Befestigungsstruktur (18) an ihrem distalen Ende (26) eine Triebwerksaufhängung (182) trägt, die für die Aufnahme der gemäß der Längsrichtung (X) ausgerichteten Kräfte konzipiert ist.

9. Antriebseinheit nach einem der Ansprüche 6 bis 8, wobei der Längsbalken (72) eine Triebwerksaufhängung (134) trägt, die bezüglich der steifen Befestigungsstruktur (18) auf der Längsseite gegenüber dem zusätzlichen Bügel (82) angeordnet und mindestens für die Aufnahme der gemäß der senkrechten Richtung (Z) ausgerichteten Kräfte konzipiert ist.

10. Antriebseinheit nach Anspruch 9, wobei die steife Befestigungsstruktur (18) an ihrem distalen Ende (26) eine Triebwerksaufhängung (146) trägt, die für die Aufnahme der gemäß der Querrichtung (Y) ausgerichteten Kräfte konzipiert ist.

11. Antriebseinheit nach Anspruch 9; wobei die Triebwerksaufhängung (134), die vom Längsbalken (72) getragen wird und auf der Längsseite gegenüber dem zusätzlichen Bügel (82) angeordnet ist, außerdem für die Aufnahme der gemäß der Querrichtung (Y) ausgerichteten Kräfte konzipiert ist.

12. Antriebseinheit nach einem der vorhergehenden Ansprüche, die außerdem eine aerodynamische Außenverkleidung (16) enthält, und wobei:
- die aerodynamische Außenverkleidung (16) eine Strukturhaut (30a) enthält, die jeden mit der steifen Befestigungsstruktur (18) verbundenen Bügel (62, 64) bedeckt und daran befestigt ist, indem sie sich mindestens bis zum distalen Ende (66b) des Bügels erstreckt, und
- die Verbindungseinrichtungen so bemessen sind, dass ein Teil der Verbindungskräfte des Triebwerks (12) an der steifen Befestigungsstruktur (18) über die Strukturhaut (30a) der aerodynamischen Außenverkleidung (16) geht.

13. Luftfahrzeug (8), **dadurch gekennzeichnet, dass** es mindestens eine Antriebseinheit (10) nach einem der vorhergehenden Ansprüche enthält, wobei jeder mit der steifen Befestigungsstruktur (18) verbundene Bügel (62, 64) einen Teil aufweist, der sich über dem Triebwerk (12} der Antriebseinheit (10) erstreckt, wenn das Luftfahrzeug am Boden geparkt ist.

## Claims

1. Propulsion unit (10) for an aircraft, comprising a turbine engine (12) with a longitudinal axis (17) parallel to a longitudinal direction (X) of said turbine engine, and an engine mounting device (14) designed to be added laterally on an aircraft structure (11), said mounting device (14) comprising a rigid mounting structure (18) with a proximal end (24) that will be connected to the aircraft structure (11) and with a distal end (26) arranged facing the turbine engine (12), said rigid mounting structure (18) supporting connecting means (28, 134, 140a, 140b, 146, 152, 172a, 172b, 182, 158a, 158b, 158c) connecting said turbine engine (12) to said rigid mounting structure (18),
in which:
- said connecting means comprise at least one arch (62, 64) with a proximal end (66a) connected to said rigid mounting structure (18) and an opposite distal end (66b);
- said arch (62, 64) being concave towards said longitudinal axis (17);
- said proximal end (66a) and distal end (66b) of said arch (62, 64) extend on each side of a longitudinal plane (V) containing said longitudinal axis (17) and that will extend vertically when said propulsion unit (10) is fitted on an aircraft parked on the ground; and
- when said arch (62, 64) is seen in a sectional view on a transverse plane (P) orthogonal to said longitudinal axis (17), a first half-line (D1) and a second half-line (D2) delimit an angular sector with an angle (θ1) of between 45 degrees and 120 degrees, wherein the first half line (D1) starts from said longitudinal axis (17) and passes through the distal end (66b) of said arch (62, 64), and the second half-line (D2) starts from said longitudinal axis (17), is contained in said longitudinal plane (V), and intercepts said arch (62,64),
said propulsion unit being **characterised in that** said connecting means comprise a distal connecting element (158c) connecting the turbine engine (12) to a distal mounting part (96c, 122b) of said arch (62, 64) and arranged on the same side as said distal end (66b) of said arch relative to said longitudinal plane (V), said distal mounting part (96c, 122b) being arranged such that when said arch (62, 64) is seen in a sectional view on said transverse plane (P), said distal mounting part (96c, 122b) extends outside an angular sector defined such that:
- the longitudinal axis (17) is its vertex,
- it forms an angle (θ2) equal to between 25 degrees and 100 degrees,
- it extends from said second half-line (D2) towards said distal end (66b) of said arch (62,64).

2. Propulsion unit according to claim 1, in which said connecting means also comprise a proximal connecting element (158b) connecting the turbine engine (12) to a proximal mounting part (96b) of said arch (62), said proximal mounting part (96b) being arranged such that when said arch (62, 64) is seen in a sectional view on said transverse plane (P), said proximal mounting part (96b) extends outside an angular sector defined such that:
- the longitudinal axis (17) is its vertex,
- it forms an angle (θ3) equal to between 25 degrees and 100 degrees,
- it extends from said second half- line (D2) towards said rigid mounting structure (18).

3. Propulsion unit according to claim 1 or 2, in which said distal connecting element (158c) and/or said proximal connecting element (158b) is a mechanical energy dissipation element that will damp turbine engine vibrations (12).

4. Propulsion unit according to any one of claims 1 to 3, in which:
- said rigid mounting structure (18) is in the form of a box,
- said arch (62, 64) prolongs a spar (52, 56) which forms a first end of said rigid mounting structure (18), along the longitudinal direction (X),
- said connecting means comprise another arch (64, 62) that prolongs a spar (56, 52) forming a second end of said rigid mounting structure (18), opposite said first end of said rigid mounting structure (18),
- said other arch (64, 62) is concave towards said longitudinal axis (17) of the turbine engine and has a distal end (66b) extending on the side of said longitudinal plane (V) opposite said rigid mounting structure (18), and
- when said other arch (64, 62) is seen in a sectional view on said transverse plane (P), a first half-line starting from said longitudinal axis (17) and passing through the distal end (66b) of said other arch (64, 62) delimits an angular sector with an angle between 45 degrees and 120 degrees, with a second half-line starting from said longitudinal axis (17), contained in said longitudinal plane (V), and intercepting said other arch (64, 62).

5. Propulsion unit according to any one of the previous claims, in which said connecting means comprise a longitudinal beam (72) supported by each arch (62, 64) connected to said rigid mounting structure (18).

6. Propulsion unit according to claim 5, in which said longitudinal beam (72) is centred relative to said longitudinal plane (V) and supports an additional arch (82) offset along the longitudinal direction (X), from said rigid mounting structure (18), and centred relative to said longitudinal plane (V), said additional arch (82) supporting two lateral engine mountings (140a, 140b) arranged on each side of said longitudinal plane (V) and designed to resist forces oriented along a vertical direction (Z) parallel to said longitudinal plane (V) and orthogonal to said longitudinal direction (X), and a central engine mounting (152) that is centred relative to said longitudinal plane (V) and designed to at least resist forces oriented along a transverse direction (Y) orthogonal to said longitudinal (X) and vertical (Z) directions.

7. Propulsion unit according to claim 6, in which said central engine mounting (152) supported by said additional arch (82) is also designed to resist forces oriented along the longitudinal direction (X).

8. Propulsion unit according to claim 6, in which said rigid mounting structure (18) supports an engine mounting (182) at its distal end (26), designed to resist forces oriented along the longitudinal direction (X).

9. Propulsion unit according to any one of claims 6 to 8, in which said longitudinal beam (72) supports an engine mounting (134) arranged, on the longitudinal side opposite said additional arch (82) relative to the rigid mounting structure (18), and designed at least to resist forces oriented along the vertical direction (Z).

10. Propulsion unit according to claim 9, in which said rigid mounting structure (18) comprises an engine mounting (146) at its distal end (26), designed to resist forces oriented along the transverse direction (Y).

11. Propulsion unit according to claim 9, in which said engine mounting (134), supported by said longitudinal beam (72) and arranged on the longitudinal side opposite said additional arch (82), is also designed to resist forces oriented along the transverse direction (Y).

12. Propulsion unit according to any one of the previous claims, also comprising an external aerodynamic fairing (16), and in which:
- said external aerodynamic fairing (16) comprises a structural skin (30a) that covers and is fixed to each arch (62, 64) connected to said rigid mounting structure (18), extending at least as far as the distal end (66b) of the arch, and
- said connecting means are designed such that part of the connection forces between the turbine engine (12) and said rigid mounting structure (18) is resisted by said structural skin (30a) of the external aerodynamic fairing (16).

13. Aircraft (8), **characterised in that** it comprises at least one propulsion unit (10) according to any one of the previous claims, in which each arch (62, 64) connected to said rigid mounting structure (18) comprises a part extending above the turbine engine (12) of said propulsion unit (10) when said aircraft is parked on the ground.
